# EUROPÄISCHE PATENTSCHRIFT

(11) **EP 4 063 250 B1**
(45) Veröffentlichungstag und Bekanntmachung des Hinweises auf die Patenterteilung: **12.02.2025**
(21) Anmeldenummer: 22020216.2
(22) Anmeldetag: 06.12.2019
(51) Int. Cl.: B62K 19/30, B62M 9/125, B62K 25/02

(54) **HALTERUNGSELEMENT UND FAHRRAD MIT EINEM HALTERUNGSELEMENT**
SUPPORT ELEMENT AND BICYCLE COMPRISING A SUPPORT ELEMENT
ÉLÉMENT DE RETENUE ET BICYCLETTE DOTÉE D'UN ÉLÉMENT DE RETENUE

(30) Priorität: 21.12.2018 DE 102018222834
(43) Veröffentlichungstag der Anmeldung: 28.09.2022
(62) Teilanmeldung aus: 19000549.6
(73) Patentinhaber: SRAM Deutschland GmbH, 97424 Schweinfurt (DE)
(72) Erfinder: Braedt, Henrik, 97456 Dittelbrunn/OT Hambach (DE)

(56) Entgegenhaltungen:
- EP-B1- 3 187 402
- DE-U1- 202006 003 055
- US-A- 5 082 303
- US-A1- 2014 306 512

## Beschreibung

Die vorliegende Erfindung betrifft in einem Aspekt ein Halterungselement für ein Fahrrad, welches dazu eingerichtet ist, einen Fahrradrahmen mit einem hinteren Schaltwerk einer Kettenschaltung zu verbinden, sowie in zwei weiteren Aspekten jeweils ein Fahrrad mit einem Halterungselement.

Üblicherweise werden hintere Schaltwerke am rechten Ausfallende eines Fahrradrahmens mit Hilfe eines Schaltauges befestigt. Bei dem Schaltauge handelt es sich regelmäßig um ein gegenüber dem Fahrradrahmen gesondertes Halterungselement (vgl. beispielsweise DE 20 2019 000 904 U1, EP 3 095 684 B1, EP 3 187 402 B1, und US 2013/0241175 A1), welches am rechten Ausfallende montiert wird und eine gegenüber der Hinterradachse radial versetzte Montageöffnung zur Anbringung des Basiselements des Schaltwerks aufweist. Auch wenn der Begriff Schaltauge sich ursprünglich auf die Montageöffnung selbst bezogen haben mag, wird fachsprachlich das die Montageöffnung aufweisende Halterungselement als "Schaltauge" bezeichnet. In der englischen Fachsprache ist für das Haltungselement der Begriff "hanger" üblich. Bekannt sind auch Fahrradrahmen mit in das rechte Ausfallende integriertem, insbesondere einteiligem Schaltauge (vgl. beispielsweise US 4,565,383 und DE-OS 2 260 252), die im Kontext der vorliegenden Erfindung aber von geringerem Interesse sind. Dokument EP3187402B1 zeigt die Präambel der unabhängigen Ansprüche 1 und 2.

Für die Montage des hinteren Schaltwerks wird das gegenüber dem Fahrradrahmen gesonderte Schaltauge regelmäßig an seinem einen Ende koaxial mit der Hinterradachse am Rahmen festgelegt und an seinem anderen Ende mit dem Basiselement (auch als "B-Knuckle" bekannt) des hinteren Schaltwerks verbunden. Das Basiselement ist relativ zum Schaltauge um eine Drehachse (B-Achse) drehbar, um das Schaltwerk in eine relative Soll-Position in Bezug auf die Hinterachse und damit ein Ritzelpaket eines hinteren Laufrads dreheinstellen zu können. So kann eine an einem beweglichen Element (auch als "P-Knuckle" bekannt) um eine Drehachse (P-Achse) drehbar gelagerte Kettenführungsanordnung in die richtige Ausgangsstellung gebracht werden. Das bewegliche Element ist über einen Bewegungsmechanismus, insbesondere Schwenkmechanismus, mit dem Basiselement verbunden.

Schaltaugen unterscheiden sich je nach Hersteller und Anbringungsart stark voneinander. Sie können - wie schon erwähnt - einteilig mit dem Rahmen ausgebildet sein oder - wie hier von besonderem Interesse - als separates Bauteil vorliegen. Separate Schaltaugen werden in der Regel entweder über Schnellspannachsen oder über Steckachsen am Rahmen geklemmt. Es ist sowohl die Klemmung auf der Rahmenaußenseite, als auch auf der Rahmeninnenseite möglich. Das führt dazu, dass das Schaltwerk je nach verwendetem Schaltauge eine andere Position relativ zur Hinterradachse und auch zum Ritzelpaket einnimmt. Diese Positionsunterschiede in axialer als auch in radialer Richtung machen die Schaltwerksauslegung und dessen Montage kompliziert. Das Schaltwerk muss je nach Schaltauge neu eingestellt werden.

Mögliche Anpassungen eines Halterungselements an einen Halterungsabschnitt eines Fahrradrahmens mittels mehrerer funktioneller Komponenten, die beispielsweise vorstehende Positionierunterschiede ausgleichen können, aber auch eine Erleichterung bei der Montage des Hinterrads bereitstellen können, sind aus der Patentanmeldung DE 10 2018 206 104 derselben Anmelderin bekannt. Die Erfindung wird durch die Ansprüche definiert.

In der vorliegenden Erfindung wird an ein Halterungselement gedacht, mittels welchem ein hinteres Schaltwerk einer Kettenschaltung an einen hinteren Halterungsabschnitt eines Fahrradrahmens montiert werden kann, und zwar nicht-koaxial in Bezug auf die Hinterradachse. Die Bereitstellung eines mit einer ein solches herkömmliches hinteres Schaltwerk aufweisenden Kettenschaltung ausgestatteten Fahrrads kann zweckmäßig (wie an sich bekannt) auf Grundlage der folgenden und weiteren üblichen Komponenten erfolgen:
- ein hinteres Laufrad (Hinterrad) mit einer eine Hinterradachsanordnung umfassenden Statoranordnung und einer Rotoranordnung, die relativ zur Statoranordnung drehbar gelagert oder lagerbar ist und eine ein Ritzelpaket der Kettenschaltung tragende Laufradnabe umfasst, und
- ein Fahrradrahmen, welcher einen linken hinteren Halterungsabschnitt und einen rechten hinteren Halterungsabschnitt für eine innere Achse der Hinterradachsanordnung des hinteren Laufrads aufweist, welche einen vorbestimmten definierten Axialabstand längs einer geometrischen Achse der mittels der Halterungsabschnitte an dem Rahmen montierten inneren Achse aufweisen und jeweils ein Gegenlager für eine an der inneren Achse angeordnete, im montierten Zustand zwischen den Halterungsabschnitten eingespannte und eine Baugruppe der Statoranordnung umfassende Komponentengruppe bilden;

sowie das hintere Schaltwerk zur nicht-koaxialen Montage in Bezug auf die geometrische Achse, umfassend:
   - ein Basiselement,
   - einen vorzugsweise als Schwenkmechanismus ausgeführten Bewegungsmechanismus,
   - ein bewegliches Element, und
   - eine Kettenführungsanordnung,
wobei der Bewegungsmechanismus das Basiselement mit dem beweglichen Element verbindet, und die Kettenführungsanordnung um eine Drehachse drehbar mit dem beweglichen Element verbunden ist. Das Basiselement umfasst ein erstes Anschlussende zur gegenüber der geometrischen Achse radial versetzten Montage an dem Fahrradrahmen bzw. einem Halterungselement (Schaltauge) und ein zweites Anschlussende zur Kopplung mit dem Bewegungsmechanismus. Das Halterungselement dient zur Montage des hinteren Schaltwerks an dem Fahrradrahmen, wobei hier insbesondere an ein an einer axialen Innenseite eines zugeordneten der hinteren Halterungsabschnitte positionierbares bzw. positioniertes Halterungselement gedacht wird. Im Falle der Montage des hinteren Schaltwerks am Fahrradrahmen gehört ein solches Halterungselement (Schaltauge) zu der im montierten Zustand zwischen den Halterungsabschnitten eingespannten Komponentengruppe. Eine Montageöffnung des Halterungselements, mittels der das erste Anschlussende des Basiselements an dem Halterungselement festlegbar ist, ist dann gegenüber der geometrischen Achse radial versetzt.

Meist wird ein solches zur Montage benötigtes Halterungselement zusammen und aufeinander abgestimmt von dem Rahmenhersteller bereitgestellt. Auf diese Weise wird eine Passgenauigkeit zwischen Rahmen und Halterungselement erzielt, die jedoch die Verwendung weiterer Fahrradkomponenten, wie beispielsweise das Schaltwerk und die Hinterradnabe, nicht berücksichtigt. Auf diese Weise können sich von der Wahl des Halterungselements abhängige Toleranzen ergeben, die eine exakte Einstellung des hinteren Schaltwerks zum Umlegen der Kette zwischen verschiedenen Kettenritzeln bei einem Gangwechsel erschweren und so zu einem Störzustand führen können, in welchem der Gangwechsel verzögert stattfindet oder gar die Kette außer Eingriff mit den Kettenritzeln geriet.

Das Schaltauge als separate, lösbar mit dem Halterungsabschnitt und dem Schaltwerk verbundene Komponente dient ferner im Falle einer ungewollten auf eine der genannten Komponenten einwirkenden Kraft, beispielsweise bei einem Fahrradsturz, dem Schutz der teuren oder oft nicht-reparablen Fahrradkomponenten, also dem Fahrradrahmen und dem hinterem Schaltwerk, indem es eine Art "Sollbruchstelle" bietet. Am Beispiel eines Falls aus der Praxis, bedeutet dies, dass nach einem Fahrradsturz, bei welchem das Halterungselement beschädigt wurde, dieses vergleichsweise kostengünstig und mit wenig Materialeinsatz vor Ort austauschbar ist. Der Fahrer des Fahrrads kann die dafür benötigten Ersatzteile und Werkzeuge bei jeder Radtour mit sich führen. Auch wenn dies eine praktikable Lösung darstellt, ist dennoch eine gewisse Zeit zur Behebung des Schadens und Fachkenntnis erforderlich, um den Austausch des Halterungselements durchzuführen.

Die **Aufgabe** der Erfindung besteht daher darin, ein Halterungselement und ein Fahrrad bereitzustellen, welche dazu beitragen, eine Schädigung eines Fahrradrahmens oder/und einer Kettenschaltung oder/und eines Halterungselements zu vermeiden, oder/und welche eine Verkürzung bzw. eine Vermeidung von Störzeiten ermöglichen, bei denen eine Kraftübertragung durch eine Fahrradkette gestört ist.

In einem **ersten Aspekt** betrifft die vorliegende Erfindung ein **Halterungselement,** welches dazu eingerichtet ist, einen Fahrradrahmen mit einem hinteren Schaltwerk einer Kettenschaltung zu verbinden, und welches einen ersten Abschnitt, welcher eine Öffnung oder Aussparung zum Aufnehmen eines Abschnitts einer Fahrradhinterradachse aufweist, und einen zweiten Abschnitt umfasst, welcher eine Montageöffnung aufweist, an welcher ein Basiselement des hinteren Schaltwerks festlegbar ist.

Gemäß diesem **ersten Aspekt** der Erfindung wird die Aufgabe dadurch gelöst, dass das Halterungselement mit wenigstens einem aus Kunststoff ausgeführten Bereich und einem aus Metall ausgeführten Bereich ausgebildet ist und der aus Kunststoff ausgeführte Bereich mit dem aus Metall ausgeführten Bereich fest verbunden ist.

Der Begriff "fest verbunden" kann in diesem Zusammenhang derart verstanden werden, dass beide Bereiche, also der aus Kunststoff ausgeführte Bereich und der aus Metall ausgeführte Bereich, nicht zerstörungsfrei voneinander lösbar sind. Beispielsweise können der aus Kunststoff ausgeführte Bereich mit dem aus Metall ausgeführten Bereich vergossen oder verklebt sein. Alternativ kann eine feste Verbindung auch mittels einer Schraubverbindung hergestellt werden, welche mit entsprechendem Werkzeug ein zerstörungsfreies Trennen der Bereiche ermöglicht, dennoch sind die Bereiche "fest verbunden" im Sinne der Erfindung.

Kunststoffbauteile können in vielen verschiedenen Dimensionen, Formen und Ausprägungen mittels Spritzgussverfahren in großen Stückzahlen hergestellt werden. In Bezug auf den aus Kunststoff ausgeführten Bereich ist somit eine Möglichkeit gegeben, diesen an vorgegebene Geometrien des Fahrradrahmens oder/und des hinteren Schaltwerks der Kettenschaltung, welches an das Halterungselement zu montieren ist, angepasst zu werden. Mittels einer solchen Anpassung können beispielsweise Fertigungstoleranzen des Fahrradrahmens ausgeglichen werden, welche sich anderenfalls auf die Positionierungsgenauigkeit und Einstellbarkeit des hinteren Schaltwerks auswirken. Das Halterungselement trägt daher dazu bei, die Zuverlässigkeit der eine Kette der Kettenschaltung zwischen verschiedenen Ritzeln eines hinteren Ritzelpakets umschaltenden Schaltvorgänge mittels des hinteren Schaltwerks zu erhöhen und folglich Störzustände zu vermeiden.

Eine Anpassung des Halterungselements an die vorgegebenen Geometrien des Fahrradrahmens oder/und des hinteren Schaltwerks kann hauptsächlich in dem ersten Abschnitt des Halterungselements erfolgen, welcher die Öffnung oder Aussprung zum Aufnehmen des Halterungsabschnitts der Fahrradhinterachse aufweist. Daher ist vorzugsweise der aus Kunststoff ausgeführte Bereich überwiegend in dem ersten Abschnitt des Halterungselements angeordnet.

Der aus Kunststoff ausgeführte Bereich kann ein mit Fasern verstärkter Kunststoff sein, insbesondere ein mit Glasfasern verstärkter Kunststoff oder ein mit Carbonfasern verstärkter Kunststoff sein.

In einem bevorzugten Ausführungsbeispiel ist der aus Metall ausgeführte Bereich laschenförmig und erstreckt sich in den ersten und den zweiten Abschnitt oder bildet diese zumindest teilweise sowie bildet zumindest teilweise die Öffnung oder Aussparung und zumindest teilweise die Montageöffnung.

Mittels des aus Metall ausgeführten Bereichs kann eine stabile Ausgestaltung des Halterungselements erzielt werden. Das Halterungselement kann somit eine hinreichende Festigkeit gegenüber den bei einer normalen Benutzung darauf einwirkenden Kräften bereitstellen.

Ferner kann/können sich die Öffnung oder Aussparung oder/und die Montageöffnung ausschließlich innerhalb des aus Metall ausgeführten Bereichs befinden. Auf diese Weise kann das Halterungselement noch stabiler und somit langlebiger ausgestaltet werden.

Die eingangs angesprochene feste Verbindung zwischen dem aus Kunststoff ausgeführten Bereich und dem aus Metall ausgeführten Bereich kann beispielsweise erzielt werden, indem der aus Kunststoff ausgeführte Bereich um den aus Metall ausgeführten Bereich gespritzt ist.

Eine solche Verbindung ist sehr zuverlässig und trägt zu einer langen Lebensdauer des Halterungselements bei, auch wenn dieses im montierten Zustand hohen Beanspruchungen ausgesetzt ist.

Eine zweckmäßige Ausgestaltung des Halterungselements besteht darin, dass der aus Metall ausgeführte Bereich mit wenigstens einem Durchgangsloch oder wenigstens einer Ausnehmung ausgeführt ist, welches oder welche mit Kunststoff ausgefüllt ist/sind, welcher dem aus Kunststoff ausgeführten Bereich zugehörig ist.

Die Ausfüllung des wenigstens einen Durchganslochs oder der wenigstens einen Ausnehmung mit dem Kunststoff, welcher dem aus Kunststoff ausgeführten Bereich zugehörig ist, stellt eine Möglichkeit dar, die feste Verbindung zwischen dem aus Metall ausgeführten Bereich und dem aus Kunststoff ausgeführten Bereich besonders stabil auszuführen. Auf diese Weise kann das Halterungselement noch stabiler und somit langlebiger ausgestaltet werden.

Das wenigstens eine mit Kunststoff ausgefüllte Durchgangsloch oder die wenigstens eine mit Kunststoff ausgefüllte Ausnehmung ist vorzugsweise in dem zweiten Abschnitt, benachbart zu der Montageöffnung und benachbart zu einem Randbereich des aus Kunststoff ausgeführten Bereichs ausgebildet. Generell kann eine Anordnung des wenigstens einen Durchganslochs oder der wenigstens einen Ausnehmung nahe des Randbereichs des aus Metall ausgeführten Bereichs einer Anordnung im mittleren Bereich bevorzugt werden.

Es wird allgemein vorgeschlagen, dass das Halterungselement, vorzugsweise dessen aus Kunststoff ausgeführter Bereich, wenigstens eine Anschlagsformation aufweist, welche dazu geeignet ist, an wenigstens einer Gegenanschlagsformation des Fahrradrahmens anzuliegen oder anzuschlagen.

Die Anschlagsformation kann eine Anschlagsfläche sein, die gleichzeitig eine äußere seitliche Randfläche des Halterungselements sein kann. Das Halterungselement kann mehrere Anschlagsformationen aufweisen. Beispielsweise kann der aus Kunststoff ausgeführte Bereich eine eine Anschlagsformation aufweisende Auskragung aufweisen.

In dem erfindunsgemässen Fall, in welchem das Halterungselement an einer Innenseite eines zugeordneten hinteren Halterungsabschnitts des Fahrradrahmens montierbar ist, kann das Halterungselement , insbesondere in seinem aus Kunststoff ausgeführten Bereich, einen von diesem Halterungsabschnitt wegweisenden axial vorstehenden Kragen aufweisen. Vorzugsweise weist eine von dem axial vorstehenden Kragen ausgebildete Führungsöffnung oder Führungsaussparung in Draufsicht auf den axial vorstehenden Kragen eine U-förmige oder J-förmige Gestalt auf.

Wenn das Halterungselement an dem zugehörigen hinteren Halterungsabschnitt des Fahrradrahmens montiert ist, kann die von dem axial vorstehenden Kragen ausgebildete Führungsöffnung oder Führungsaussparung zur Führung und Positionierung einer Achsführung eines Hinterrads des Fahrrads während der Montage des Hinterrades an den Halterungsabschnitt des Fahrradrahmens verwendet werden. Beispielsweise wird dabei eine Hülse der Achsführung des Hinterrads entlang der Führungsöffnung oder Positionierungsaussparung geführt und im Anschlag mit dieser fluchtend mit der Öffnung oder Aussparung des Halterungselements in Position gehalten, während die Nabenachse, insbesondere Steckachse, durch die Achsführung, insbesondere Steckachsenführung, des Hinterrads und weiter durch die Öffnung oder Aussparung des Halterungselements geführt wird. Auf diese Weise wird eine exakte Positionierung der Komponenten zueinander ermöglicht und ist die Zeit für einen Einbau des Hinterrades verkürzt.

Bei dem erfindungsgemässen Halterungselement bildet, vorzugsweise dessen aus Kunststoff ausgeführter Bereich, einen Ableitflächenbereich aus, an welchem eine Fahrradkette quer zu ihrer Längsrichtung abrutschen kann.

Der Ableitflächenbereich ist vorzugsweise an einem oder dem axial vorstehenden Kragen ausgebildet. Der Ableitflächenbereich ist vorzugsweise derart ausgebildet, dass eine Kette in einem Störzustand, also wenn diese nicht in Eingriff mit einem Ritzel eines Ritzelpakets des hinteren Schaltwerks steht, jedoch auf dem Ableitflächenbereich aufliegt, in Richtung des Ritzelpakets abrutschen kann und wieder in Eingriff mit einem Ritzel, vorzugsweise dem kleinsten Ritzel, gelangen kann. Auf diese Weise wird der angesprochene Störzustand zeitnah behoben, ohne dass ein fahrradfahrender Fahrradfahrer seine Fahrt unterbrechen muss. Ferner kann der Ableitflächenbereich dazu eingerichtet sein, ein Verklemmen der Fahrradkette am Fahrradrahmen, beispielsweise zwischen dem kleinsten Ritzel des Ritzelpakets des hinteren Schaltwerks und dem Halterungselement, zu verhindern, wenn sich die Fahrradkette der Kettenschaltung in dem angesprochenen Störzustand befindet. Auf diese Weise kann einer Beschädigung des Fahrradrahmens durch die Kette vorgebeugt werden. Zur Erzielung des letztgenannten Effekts sollte der Ableitflächenbereich derart ausgebildet sein, dass im montierten Zustand ein Abstand zwischen dem Ableitflächenbereich und dem kleinsten Ritzel des Ritzelpakets geringer ist als die Breite von Fahrradkettengliedern der Fahrradkette.

Der Ableitflächenbereich weist eine schräge Ableitfläche auf. In diesem Zusammenhang bedeutet der Begriff "schräg", dass ein Winkel zwischen einer ebenen Oberfläche des Halterungselements und der schrägen Ableitfläche ungleich 90° ist. Der Winkel zwischen der ebenen Oberfläche und der schrägen Ableitfläche kann vorzugsweise zwischen 70° und 10°, besser zwischen 60° und 20°, noch besser zwischen 30° und 50°. betragen.

Der Ableitflächenbereich kann auch eine Ableitfläche aufweisen, deren Gestalt von einer ebenen Ausbildung abweicht. Beispielsweise kann die Ableitfläche an ihren Längsseiten von einem ersten und einem zweiten Rand begrenzt sein. Die Fläche zwischen dem ersten und dem zweiten Rand kann im Wesentlichen konkav gewölbt oder im Wesentlichen konvex gewölbt sein oder kann eine Kombination aus einer konkaven oder/und konvexen oder/und ebenen Ausbildung sein.

Ein maximaler Abstand des ersten und des zweiten Randes kann, gemessen in Draufsicht, in etwa zwischen 2 mm und 10 mm, besser zwischen 4 mm und 8 mm, noch besser zwischen 5 mm und 6 mm, betragen.

Ferner kann das Halterungselement mehr als einen Ableitflächenbereich aufweisen, vorzugsweise zwei Ableitflächenbereiche aufweisen, wobei alle Ableitflächenbereiche gemäß einer der vorstehenden Ausführungen ausgebildet sein können, sich jedoch voneinander unterscheiden können. Ein Ableitflächenbereich kann dazu eingerichtet sein, im montierten Zustand benachbart zu einem Lasttrum der Kette angeordnet zu sein, während ein anderer benachbart zu einem Leertrum der Kette angeordnet sein kann. Die zwei Ableitflächenbereiche können einen unterschiedlichen Abstand zum Mittelpunkt der Öffnung oder Aussparung aufweisen.

Erfindungsgemäss ist das Halterungselement an einer/der Innenseite eines/des zugeordneten hinteren Halterungsabschnitts des Fahrradrahmens montierbar und kann vermittels des aus dem aus Kunststoff ausgeführten Bereichs an diesem Halterungsabschnitt anliegen oder/und mit einer Halterungsöffnung dieses Halterungsabschnitts in Formschluss bringbar sein.

Es versteht sich, dass der aus Kunststoff ausgeführte Bereich speziell an die jeweilige Form des Halterungsabschnitts angepasst sein kann, wodurch eine passgenaue Positionierung des Halterungselements möglich ist.

Grundsätzlich ist denkbar, dass das Halterungselement mittels einer in dem aus Kunststoff ausgeführten Bereich ausgebildeten Aufnahme für eine Befestigungsschraube sowie einer Steckachse an einer/der Innenseite des zugeordneten hinteren Halterungsabschnitts des Fahrradrahmens montierbar ist, wobei die Aufnahme vorzugsweise mit einer/der Halterungsöffnung des Halterungsabschnitts in Formschluss bringbar ist.

Die Aufnahme für die Befestigungsschraube kann zumindest teilweise in die Halterungsöffnung eingreifen. Ferner kann die Aufnahme für die Befestigungsschraube die Gestalt eines Hohlzylinders aufweisen. Somit kann das Halterungselement bei dessen Montage an dem Halterungsabschnitt exakt positioniert werden und kann anschließend sehr schnell mit einer Befestigungsschraube fest mit dem Halterungsabschnitt verbunden werden.

Generell kann in dem montierten Zustand das Halterungselement mit Hilfe der Befestigungsschraube mit dem zugeordneten hinteren Halterungsabschnitt des Fahrradrahmens derart verbunden werden, dass sich die Öffnung oder Aussparung des Halterungselements an eine Halterungsöffnung des zugeordneten hinteren Halterungsabschnitts des Fahrradrahmens anschließt und beide eine gemeinsame Durchgangsöffnung für eine Nabenachse bilden. Folglich kann in dem montierten Zustand eine Nabenachse die Öffnung oder Aussparung, die Befestigungsschraube als auch die Halterungsöffnung in dem zugeordneten hinteren Halterungsabschnitt durchtreten.

Die Aufnahme kann Fertigungstoleranzen des Halterungsabschnitts oder/und von dessen Halterungsöffnung ausgleichen. Dies ist einerseits aufgrund der elastischen Eigenschaft des Kunststoffs möglich. Andererseits kann die Aufnahme einen Anlagenbereich oder/und einen Ausgleichsbereich, beispielsweise einen leicht konisch zulaufenden Außenumfang, aufweisen. Im Allgemeinen kann die Aufnahme die Positionierung des Halterungselements gegenüber dem Halterungsabschnitt verbessern, was wiederum für eine ordnungsgemäße Positionierung des hinteren Schaltwerks und dessen Zuverlässigkeit im Betrieb bedeutsam ist.

Vorzugsweise weist die Aufnahme für die Befestigungsschraube ein Innengewinde aufweist, welches mit einem Außengewinde, insbesondere einem Linksgewinde, der Befestigungsschraube in Eingriff bringbar ist.

Das Innengewinde der Aufnahme für die Befestigungsschraube kann während des Spritzgussverfahrens entstehen, indem ein Linksgewinde umspritzt wird.

In einem montierten Zustand, in welchem das Halterungselement einen Fahrradrahmen mit dem hinteren Schaltwerk der Kettenschaltung verbindet, kann die Befestigungsschraube in die Aufnahme für die Befestigungsschraube eingeschraubt sein. In diesem Zustand kann sich die Nabenachse, vorzugsweise Steckachse, durch die Öffnung oder Aussparung und die Befestigungsschraube erstrecken.

Die Aufnahme für die Befestigungsschraube steht vorzugsweise mindestens 5 mm, besser mindestens 10 mm, noch besser mindestens 15 mm, von einer der Aufnahme für die Befestigungsschraube zugewandten Oberfläche des aus Metall ausgeführten Bereichs des Halterungselements hervor. Dies verbessert ein Eingreifen der Aufnahme in die Halterungsöffnung des Halterungsabschnitts des Fahrradrahmens. Zudem ist eine gewisse Länge der Aufnahme für ein zuverlässiges Einschrauben der Befestigungsschraube in die Aufnahme von Vorteil.

Die Kombination einer Ausbildung der Aufnahme in dem aus Kunststoff ausgeführten Bereich und der Verwendung einer metallischen Befestigungsschraube ermöglicht es, sowohl die Vorteile von Kunststoff, beispielsweise dessen einfache Formbarkeit und Elastizität, als auch von Metallen, beispielsweise dessen hohe Steifigkeit und Abriebfestigkeit, zu nutzen. Auf diese Weise wird die Störanfälligkeit des Halterungselements verringert.

Zudem weist in einem denkbaren Ausführungsbeispiel das Halterungselement, vorzugsweise dessen aus Kunststoff ausgeführter Bereich, einen Abstandshalter auf, welcher vorzugsweise anliegend an einer/der Innenseite eines/des zugeordneten hinteren Halterungsabschnitts platzierbar oder platziert ist, um den aus Metall ausgeführten Bereich relativ zu dem zugeordneten hinteren Halterungsabschnitt des Fahrradrahmens definiert zu positionieren.

Der Abstandshalter kann somit auch die Position des hinteren Schaltwerks in Bezug auf das dem Hinterrad zugeordneten Ritzelpaket bestimmen. Das heißt, nimmt eine Dicke des Abstandshalters in Achsrichtung der Öffnung oder Aussparung zu, rückt der aus Metall ausgeführte Bereich des Halterungselements und das daran befestigte hintere Schaltwerk näher an das Hinterrad heran. Der Abstandshalter kann daher bei entsprechender Dimensionierung von dessen Dicke für eine ordnungsgemäße Positionierung des hinteren Schaltwerks in Bezug auf das Ritzelpaket und dessen Zuverlässigkeit im Betrieb bedeutsam sein. Ferner ermöglicht die Ausführung des Abstandshalters aus Kunststoff eine Anpassung an den jeweils gewählten Rahmen bzw. das jeweils gewählte Ritzelpaket. Beispielsweise könnte ein Fahrradhersteller oder -ausrüster aus mehreren Halterungselementen das mit dem am geeignetsten dimensionierten Abstandshalter auswählen.

Vorzugsweise ist der Abstandshalter in dem ersten Abschnitt des Halterungselements angeordnet. Der Abstandshalter kann zwischen der Öffnung oder Aussparung und der Montageöffnung angeordnet sein. Der Abstandshalter und die Aufnahme für die Befestigungsschraube können einander benachbart angeordnet oder/und integral miteinander ausgebildet sein.

Alternativ oder zusätzlich zu dem Abstandselement kann das Halterungselement, vorzugsweise dessen aus Kunststoff ausgeführter Bereich, einen Anlagenflansch aufweisen, welcher anliegend an einer/der Innenseite eines/des zugeordneten hinteren Halterungsabschnitts platzierbar oder platziert ist, um vorzugsweise den aus Metall ausgeführten Bereich relativ zu dem zugeordneten hinteren Halterungsabschnitt des Fahrradrahmens definiert zu positionieren. Der Anlagenflansch kann lösbar mit dem Halterungselement verbunden sein, beispielsweise auf die Aufnahme des Halterungselements aufgesteckt sein.

Anstelle des Anlagenflansches kann das Halterungselement eine Flanschaufnahme aufweisen, welche vorzugsweise anliegend an einer/der Innenseite eines/des zugeordneten hinteren Halterungsabschnitts platzierbar oder platziert ist, um vorzugsweise den aus Metall ausgeführten Bereich relativ zu dem zugeordneten hinteren Halterungsabschnitt des Fahrradrahmens definiert zu positionieren.

Sowohl der Anlagenflansch als auch die Flanschaufnahme des Halterungselements kann eine Positionierung des Halterungselements an dem zugeordneten Halterungsabschnitt erleichtern.

In einem **zweiten Aspekt,** welcher jedoch nicht beansprucht wird, geht es um ein **Fahrrad,** welches einen Fahrradrahmen mit einem vermittels einer Kettenschaltung antreibbaren Hinterrad umfasst, welches ein Ritzelpaket der Kettenschaltung aufweist, wobei eine in einem jeweiligen gewählten Gang mit einem ausgewählten Ritzel eingreifende Kette der Kettenschaltung mittels eines hinteren Schaltwerks der Kettenschaltung zwischen den Ritzeln des Ritzelpakets überführbar ist, wobei das hintere Schaltwerk mittels eines an einer Innenseite eines zugeordneten hinteren Halterungsabschnitts des Fahrradrahmens montierten Halterungselements mit dem Fahrradrahmen verbunden ist. Das Halterungselement umfasst einen ersten Abschnitt, welcher eine Öffnung oder Aussparung aufweist, in welcher ein Abschnitt einer Fahrradhinterradachse des Hinterrads aufgenommen ist, und einen zweiten Abschnitt, welcher eine Montageöffnung aufweist, an welcher ein Basiselement des hinteren Schaltwerks festgelegt ist.

Bei dem Halterungselement kann es sich um das zuvor gemäß dem ersten Aspekt der Erfindung beschriebene Halterungselement handeln. Alternativ kann das Halterungselement mit wenigstens einem aus Kunststoff ausgeführten Bereich und einem aus Metall ausgeführten Bereich ausgebildet sein und kann der aus Kunststoff ausgeführte Bereich mit dem aus Metall ausgeführten Bereich lösbar verbunden sein.

Gemäß diesem **zweiten Aspekt** wird die Aufgabe dadurch gelöst, dass das Halterungselement in einer Soll-Stellung an dem zugeordneten hinteren Halterungsabschnitt reibschlüssig festgelegt oder festlegbar ist und im Falle eines Anlegens einer die reibschlüssige Haltekraft übersteigenden Verdrehkraft aus der Soll-Stellung in Richtung einer Anschlag-Stellung, in welcher das Halterungselement im Anschlag mit wenigstens einem Drehanschlag des hinteren Halterungsabschnitts ist, verdrehbar ist.

Der Begriff "verdrehbar" bedeutet in diesem Zusammenhang eine Verdrehung, welche deutlich von einem einfachen Fertigungsspiel abzugrenzen ist und vorzugsweise mindestens 10°, besser mindestens 20°, noch besser mindesten 30° beträgt.

Das Halterungselement ist vorzugsweise um eine Drehachse verdrehbar, deren Mittelpunkt in einer Öffnung oder Aussparung des Halterungselements liegt. Es kann sich um die Öffnung oder Aussparung handeln, welche zum Aufnehmen eines Abschnitts einer Fahrradhinterradachse eingerichtet ist.

Eine Ausrichtung des Halterungselements in der Soll-Stellung kann sich von einer Ausrichtung des Halterungselements in der Anschlag-Stellung um einen Drehwinkel von etwa 25° bis 105°, besser von etwa 40° bis 90°, noch besser von etwa 55° bis 75° unterscheiden.

Die Haltekraft wird vorzugsweise mittels aneinander anliegenden Flächen von dem Halterungselement und dem Halterungsabschnitt bereitgestellt. Im Falle der Verwendung eines Halterungselements nach dem erste Aspekt der Erfindung können beispielsweise eine Außenfläche der Aufnahme für eine Befestigungsschraube formschlüssig an einer Innenfläche einer Halterungsöffnung des Halterungsabschnitts anliegen, wobei zwischen den zuvor genannten Flächen eine Haltekraft bereitgestellt wird. Zusätzlich oder alternativ kann eine Fläche des Abstandshalters an einer Fläche des Halterungsabschnitts anliegen, sodass zwischen diesen Flächen ebenfalls eine Haltekraft bereitgestellt wird.

Die zuvor angesprochene Verdrehung kann beispielsweise während einer Bewegung des Fahrrads erfolgen, wenn ein Hindernis eine Kraft auf das hintere Schaltwerk ausübt. Bei herkömmlichen Fahrrädern, bei welchen eine solche Verdrehung des Halterungselements nicht möglich ist, wird diese Kraft unmittelbar auf das Halterungselement übertragen, was meist zu einer Beschädigung des Halterungselements oder gar des daran starr befestigten Fahrradrahmens oder/und des daran starr befestigten hinteren Schaltwerks führt. Das erfindungsgemäße Halterungselement kann einer solchen Beschädigung entgegenwirken, indem es bei Einwirkung einer solchen Kraft diese zumindest teilweise aufnimmt und für eine Verdrehung von der Soll-Stellung in Richtung der Anschlag-Stellung, vorzugsweise in einer Rückwärtsdrehbewegung, des Halterungselements nutzt.

Ebenso kann beispielsweise die Verdrehung des Halterungselements gegenüber dem zugeordneten hinteren Halterungsabschnitt erfolgen, wenn ein Gegenstand die betriebsmäßig vorgesehene Umlaufbewegung der Kette derart stört, dass die Kette das hintere Schaltwerk aus dessen Betriebsposition bewegt und diese Bewegung auf das mit dem hinteren Schaltwerk verbundene Halterungselement übertragen wird. Ist diese äußere Krafteinwirkung größer als die reibschlüssige Haltekraft zwischen dem Halterungselement und dem zugeordneten hinteren Halterungsabschnitt, kann sich das Halterungselement gegenüber dem zugeordneten Halterungsabschnitt verdrehen und somit einer Beschädigung des hinteren Schaltwerks oder der Kette selbst entgegenwirken.

Vorzugsweise wirkt die reibschlüssige Haltekraft auch während des Verdrehens des Halterungselements, insbesondere während der Rückwärtsdrehbewegung, sodass der Verdrehvorgang eine gewisse Zeitdauer benötigt, welche dem fahrradfahrenden Radfahrer als Reaktionszeit verbleibt, in welcher er auf die Krafteinwirkung entsprechend reagieren kann. Beispielsweise kann der fahrradfahrende Radfahrer ein Treten bzw. einen Kettenantrieb einstellen oder/und die auf das Halterungselement einwirkende Kraft manuell beseitigen. Bei einer aktiven oder passiven Beseitigung des Hindernisses bzw. der auf das hintere Schaltwerk ausgeübten Kraft kann die Verdrehung gestoppt werden bevor sich das Halterungselement in der Anschlag-Stellung (einer zweiten Anschlag-Stellung) befindet, in welcher das Halterungselement im Anschlag mit wenigstens einem Drehanschlag des hinteren Halterungsabschnitts ist. Anderenfalls kann die Verdrehung fortgesetzt werden bis sich das Halterungselement in der Anschlag-Stellung (zweiten Anschlag-Stellung) befindet.

Die Anschlag-Stellung kann jede beliebige Anschlag-Stellung sein, bei welcher die Verdrehung des Halterungselements in Richtung der Verdrehrichtung gestoppt wird. Die Verdrehung des Halterungselements bewirkt gleichermaßen eine Verdrehung des hinteren Schaltwerks und eine damit einhergehende Vergrößerung des Umlaufwegs der Kette. Das heißt, bei einer Verdrehung des Halterungselements in Richtung der Anschlag-Stellung nimmt eine Kettenspannung zu. Das Stoppen der Verdrehung des Halterungselements in der Anschlag-Stellung verhindert eine zu einer Beschädigung führende Kettenspannung. Die Anschlag-Stellung (zweite Anschlag-Stellung) ist daher vorzugsweise derart konfiguriert, dass eine Beschädigung des hinteren Schaltwerks oder/und der Kette selbst aufgrund der durch die Verdrehung des Halterungselements verursachten Kettenspannung verhindert wird.

Es wird allgemein vorgeschlagen, dass der hintere Halterungsabschnitt zwei Drehanschläge aufweist, einen Vorwärts-Drehanschlag und einen Rückwärts-Drehanschlag, wobei sich das Halterungselement in einer der Soll-Stellung entsprechenden ersten Anschlag-Stellung im Anschlag mit dem Vorwärts-Drehanschlag befindet und im Falle des Anlegens der die reibschlüssige Haltekraft übersteigenden Verdrehkraft in eine zweite Anschlag-Stellung (zuvor lediglich als Anschlag-Stellung bezeichnet) im Anschlag mit dem Rückwärts-Drehanschlag verdrehbar ist.

Der Vorwärts-Drehanschlag begrenzt in dem montierten Zustand eine Verdrehung des Halterungselements in einer Vorwärtsdrehrichtung des Halterungselements und der Rückwärts-Drehanschlag begrenzt in dem montierten Zustand eine Verdrehung des Halterungselements in einer Rückwärtsdrehrichtung des Halterungselements.

Vorzugsweise ist das Halterungselement nach dem ersten Aspekt der Erfindung ausgebildet und vorteilhafterweise weist dieses die erste Anschlagsformation des Halterungselements auf, welche in der ersten Anschlag-Stellung an einer Gegenanschlagsformation des Vorwärts-Drehanschlags anschlägt, wobei die erste Anschlagsformation von dem aus Kunststoff ausgeführten Bereich ausgebildet sein kann.

Bei einer derartigen Ausbildung der ersten Anschlagsformation kann die einfache Formbarkeit von Kunststoff sowie dessen elastische Eigenschaft genutzt werden. Ersteres erlaubt eine genaue Anpassung der Anschlagsformation des Halterungselements an die Gegenanschlagsformation des Vorwärts-Drehanschlags und letzteres kann eine Beschädigung des Rahmens und des Halterungselements beim Anschlagen der ersten Anschlagformation des Halterungselements an die Gegenanschlagformation des Vorwärts-Drehanschlags vermeiden.

Vorzugsweise ist die erste Anschlagsformation eine erste Anschlagsfläche. Die erste Anschlagsfläche kann von dem axial vorstehenden Kragen des Halterungselements nach dem ersten Aspekt ausgebildet sein, beispielsweise eine von dem Halterungselement wegweisende äußere Randfläche des axial vorstehenden Kragens sein. Auch kann die erste Anschlagsformation an der von dem Kragen ausgebildeten Auskragung angeordnet sein.

Eine Kontaktfläche zwischen der in der ersten Anschlag-Stellung an dem Vorwärts-Drehanschlag anschlagenden ersten Anschlagsformation des Halterungselements und der Gegenanschlagsformation des Vorwärts-Drehanschlags des Halterungsabschnitts beträgt vorzugsweise mindestens 10 mm².

Die Kontaktfläche ist notwendig, um ein Verdrehen des Halterungselements in der Vorwärtsdrehrichtung und über den Vorwärts-Drehanschlag hinaus, beispielsweise bei der Montage, zu verhindern. Die Kontaktfläche ist vorzugsweise hinreichend groß, um eine ein unerwünschtes Verdrehen des Halterungselements verhindernde Haltekraft bereitzustellen, welche größer ist als eine im Betrieb zu erwartende auf das Halterungselement einwirkende Verdrehkraft in der Vorwärtsdrehrichtung. Vorzugsweise wird das Halterungselement während des Betriebs des Fahrrads mittels einer Kettenspannung der Fahrradkette der Kettenschaltung in Richtung der ersten Anschlag-Stellung vorgespannt.

Es ist denkbar, dass das gemäß dem ersten Aspekt ausgebildete Halterungselement eine zweite Anschlagsformation aufweist, welche in der zweiten Anschlag-Stellung an einer Gegenanschlagsformation des Rückwärts-Drehanschlags anschlägt, wobei die zweite Anschlagsformation vorzugsweise von dem aus Kunststoff ausgeführten Bereich ausgebildet ist.

Es ergeben sich die vorstehend in Bezug auf die erste Anschlagsformation erwähnten vorteilhaften Effekte analog für die zweite Anschlagsformation.

Vorzugsweise ist die zweite Anschlagsformation eine zweite Anschlagsfläche. Die zweite Anschlagsfläche kann von dem axial vorstehenden Kragen ausgebildet sein, beispielsweise eine von dem Halterungselement wegweisende äußere Randfläche des Kragens sein. Auch kann die zweite Anschlagsformation an der von dem Kragen ausgebildeten Auskragung angeordnet sein.

Die erste Anschlagsformation kann zu der zweiten Anschlagsformation benachbart angeordnet sein. Beispielweise kann, im Falle einer Ausbildung der ersten und zweiten Anschlagsformation als erste bzw. zweite Anschlagsfläche, ein Winkel zwischen der ersten Anschlagsfläche und der zweiten Anschlagsfläche zwischen 70° und 120° betragen.

Es kann vorgesehen sein, dass ein eine Vertiefung, beispielsweise ein Rand oder eine Schräge davon, in dem zugeordneten Halterungsabschnitt oder ein von diesem vorstehender Vorsprung die Gegenanschlagsformation des Vorwärts-Drehanschlags ausbildet.

Die erste Anschlagsformation, vorzugsweise die erste Anschlagsfläche, des Halterungselements kann formschlüssig an der Gegenanschlagsformation des Vorwärts-Drehanschlags, vorzugsweise an einem Rand des Vorwärts-Drehanschlags des Halterungsabschnitts anliegen. Eine Fläche dieses Randes kann sich im rechten Winkel zu den sich daran anschließenden Flächen erstrecken oder als eine schräge Fläche ausgebildet sein.

Es wird allgemein vorgeschlagen, dass die oder eine Vertiefung in dem zugeordneten Halterungsabschnitt oder der oder ein von diesem vorstehender Vorsprung die Gegenanschlagsformation des Rückwärts-Drehanschlags ausbildet.

Vorzugsweise werden die Gegenanschlagsformation des Vorwärts-Drehanschlags und die Gegenanschlagsformation des Rückwärts-Drehanschlags von einem gemeinsamen Vorsprung oder von einer gemeinsamen Vertiefung an dem Halterungsabschnitt ausgebildet.

Alternativ kann die Gegenanschlagsformation des Vorwärts-Drehanschlags eine erste Randfläche der Vertiefung oder des Vorsprungs sein oder/und kann die Gegenanschlagsformation des Rückwärts-Drehanschlags eine zweite Randfläche der weiteren Vertiefung oder des weiteren Vorsprungs sein.

Die zweite Anschlagsformation, vorzugsweise die zweite Anschlagsfläche, des Halterungselements kann formschlüssig an der Gegenanschlagsformation des Rückwärts-Drehanschlags, vorzugsweise an einem Rand des Rückwärts-Drehanschlags des Halterungsabschnitts anliegen. Eine Fläche dieses Randes kann sich im rechten Winkel zu den sich daran anschließenden Flächen erstrecken oder als eine schräge Fläche ausgebildet sein.

Der Vorsprung kann integral mit dem Halterungsabschnitt ausgebildet sein oder auf diesen aufgeschraubt oder aufschraubbar sein.

In Weiterbildung der Erfindung kann das Halterungselement einen Ableitflächenbereich ausbilden, an welcher eine Kette quer zu ihrer Längserstreckung in einer von der Innenseite des zugeordneten hinteren Halterungsabschnitts wegweisenden Richtung abrutschen kann.

Der Ableitflächenbereich kann gemäß dem Ableitflächenbereich des ersten Aspekts der Erfindung ausgebildet sein. Im Fall einer schrägen Ableitfläche kann diese schräg in Bezug auf eine ebene Oberfläche des Halterungselements sein, wobei die schräge Ableitfläche schräg in einer von der Innenseite des zugeordneten hinteren Halterungsabschnitts weg weisenden Richtung abfällt.

Generell kann sich das Halterungselement in dem Zustand, in welchem es an der Innenseite des zugeordneten hinteren Halterungsabschnitts des Fahrradrahmens montiert ist, in einen Raum zwischen einem kleinsten Ritzel des Ritzelpakets des hinteren Schaltwerks und der Innenseite des zugeordneten hinteren Halterungsabschnitts erstrecken. Vorzugsweise ist diese Erstreckung derart, dass ein Abstand zwischen dem kleinsten Ritzel und dem Halterungselement ein Verklemmen der Kette dazwischen verhindert. In anderen Worten, der Abstand ist kleiner als die Breite bzw. Dicke eines Kettengliedes der Kette.

In einem **dritten Aspekt** betrifft die vorliegende Erfindung ein **Fahrrad,** vorzugsweise nach dem zweiten Aspekt der Erfindung, welches einen Fahrradrahmen mit einem vermittels einer Kettenschaltung antreibbaren Hinterrad umfasst, welches ein Ritzelpaket der Kettenschaltung aufweist, wobei eine in einem jeweiligen gewählten Gang mit einem ausgewählten Ritzel eingreifende Kette der Kettenschaltung mittels eines hinteren Schaltwerks der Kettenschaltung zwischen den Ritzeln des Ritzelpakets überführbar ist, wobei das hintere Schaltwerk mittels eines an einer Innenseite eines zugeordneten hinteren Halterungsabschnitts des Fahrradrahmens montierten Halterungselements mit dem Fahrradrahmen verbunden ist, wobei das Halterungselement einen ersten Abschnitt, welcher eine Öffnung oder Aussparung aufweist, in welcher ein Abschnitt einer Fahrradhinterradachse des Hinterrads aufgenommen ist, und einen zweiten Abschnitt umfasst, welcher eine Montageöffnung aufweist, an welcher ein Basiselement des hinteren Schaltwerks festgelegt ist.

Bei dem Halterungselement kann es sich um das zuvor gemäß dem ersten Aspekt der Erfindung beschriebene Halterungselement handeln. Alternativ kann das Halterungselement mit wenigstens einem aus Kunststoff ausgeführten Bereich und einem aus Metall ausgeführten Bereich ausgebildet sein und kann der aus Kunststoff ausgeführte Bereich mit dem aus Metall ausgeführten Bereich lösbar verbunden sein.

Gemäß diesem **dritten Aspekt** der Erfindung wird die Aufgabe dadurch gelöst, dass das Halterungselement an wenigstens einem äußeren Randbereich mit einem Ableitflächenbereich mit einer schrägen Ableitfläche ausgeführt ist, auf welchem die Kette, wenn sie von einem Ritzel des Ritzelpakets in Richtung zum Halterungselement über den axialen Bereich des Ritzelpakets hinaus abgesprungen ist, aufliegen kann und dann in Richtung des kleinsten Ritzels abrutschen kann, um eine Wiederherstellung des Eingriffs der Kette mit dem oder einem Ritzel des Ritzelpakets zu erreichen oder zu diesem beizutragen.

Anders gesagt, die Kette kann von selbst wieder in Eingriff mit einem Ritzel, ggf. dem kleinsten Ritzel, gelangen oder/und kann zumindest mittels des hinteren Schaltwerks wieder in den Eingriff mit einem Ritzel, ggf. dem kleinsten Ritzel, gebracht werden.

Somit kann in einem Störungszustand, in welchem die Kette nicht im Eingriff mit einem der Ritzel des Ritzelpakets steht, der Ableitflächenbereich dazu eingerichtet sein, eine Bewegung der Kette in Richtung eines Ritzels, vorzugsweise des kleinsten Ritzels, des Zahnkranzes zu veranlassen, sodass der Normalzustand, bei welchem sich die Kette im Eingriff mit einem der Ritzel des Zahnkranzes befindet, wiederhergestellt wird. Der Störzustand kann somit behoben werden, ohne dass der fahrradfahrende Radfahrer seine Fahrt unterbrechen muss.

Wie später detaillierter ausgeführt, kann der Ableitflächenbereich eine im Wesentlichen ebene Ableitfläche, eine konvexe Ableitfläche oder eine konkave Ableitfläche umfassen. Auch kann der Ableitflächenbereich eine Kombination der zuvor genannten Gestaltungen von Ableitflächen umfassen.

Es wird besonders daran gedacht, dass ein Abstand zwischen einer in Richtung des Ritzelpakets weisenden Außenfläche des Halterungselements und dem kleinsten Ritzel derart ist, dass die Kette nicht dazwischen einklemmen kann. Vorzugsweise ist die in Richtung des Ritzelpakets weisende Außenfläche diejenige, welche am weitesten in diese Richtung hervorsteht.

Eine derartige Ausgestaltung vermeidet einen durch eine eingeklemmte Kette hervorgerufenen Störzustand, welcher lediglich bei einer Unterbrechung der Fahrt mit dem Fahrrad behoben werden kann. Ein Fahrradhersteller oder -ausrüster kann dazu beispielsweise ein Halterungselement nach dem ersten Aspekt auswählen, welches den gewünschten Abstand ermöglicht. Diese Auswahl kann individuell für jedes Fahrrad erfolgen und von dem gewählten Fahrradrahmen sowie dem gewählten Ritzelpaket und deren Fertigungstoleranzen abhängen.

Es wird allgemein Vorgeschlagen, dass in Bezug auf einen Mittelpunkt einer/der Öffnung oder Aussparung des Halterungselements ein radiales Niveau eines dem Ritzelpaket nächstbenachbarten ersten Randes des Ableitflächenbereichs auf dem radialen Niveau eines Kopfkreisdurchmessers des kleinsten Ritzels des Ritzelpakets liegt oder gegenüber diesem nach radial innen versetzt ist.

Das nach innen versetzte radiale Niveau des ersten Randes des Ableitflächenbereichs gegenüber dem Kopfkreismesser des kleinsten Ritzels ermöglicht ein Abrutschen der Kette entlang des Ableitflächenbereichs bis zu einem in Eingriff gelangen mit einem Ritzel.

Der erste Rand des Ableitflächenbereichs kann einen geradlinigen oder/und einen gebogenen Verlauf aufweisen. Ein gebogener Verlauf des Randes kann zumindest Abschnittsweise an die Rundung des kleinsten Ritzels angepasst sein.

Ferner wird vorgeschlagen, dass der Ableitflächenbereich einen zweiten Rand aufweist, welcher dem zugeordneten hinteren Halterungsabschnitt näher ist als der erste Rand, und in Bezug auf das radiale Niveau des ersten Randes nach außen versetzt ist.

Die Ränder können derart angeordnet sein, dass eine gedachte Verlängerung, welche die zwei Ränder des Ableitflächenbereichs schneidet und in Richtung des kleinsten Ritzels verläuft, ebenfalls die durch den Kopfkreisdurchmesser des kleinsten Ritzels des Ritzelpakets definierte Umlauffläche des kleinsten Ritzels oder das kleinste Ritzel innerhalb des Kopfkreises schneiden kann. Diese geometrische Gestaltung der Ränder in Bezug auf das kleinste Ritzel ermöglicht ein effektives wieder in Eingriff Bringen der Kette und des kleinsten Ritzels mittels des Ableitflächenbereichs.

Bevorzugt ist die Fläche zwischen dem ersten und dem zweiten Rand im Wesentlichen planar oder im Wesentlichen konkav gewölbt oder im Wesentlichen konvex gewölbt oder weist eine Kombination einer oder mehrerer der genannten Formen auf. Dies ermöglicht ein Abrutschen der Kette in Richtung des kleinsten Ritzels, ohne dass Teile des Fahrradrahmens beschädigt werden.

Ein maximaler Abstand zwischen dem ersten und dem zweiten Rand kann vorteilhaft, gemessen in Draufsicht, in etwa zwischen 2 mm und 10 mm, besser zwischen 4 mm und 8 mm, noch besser zwischen 5 mm und 6 mm betragen.

In Weiterbildung der Erfindung kann das Halterungselement zwei gesondert ausgeführte Ableitflächenbereiche umfassen, welche in Bezug auf einen/den Mittelpunkt einer/der Öffnung oder Aussparung des Halterungselements bei unterschiedlichen Drehwinkeln angeordnet sind.

Im Betriebszustand wird die Kette zumindest um ein vorderes Kettenrad und ein Ritzel des hinteren Ritzelpakets geführt. Dabei unterscheidet man zwischen dem Lasttrum der Kette, welches das gezogene und durch die am vorderen Kettenrad in die Kette eingeleiteten Kräfte vorgespannte Trum der Kette ist, und dem Leertrum der Kette, welches das lose Trum der Kette ist. Vorzugsweise befindet sich einer der zwei Ableitflächenbereiche benachbart zu dem Lasttrum und der andere benachbart zu dem Leertrum. Eine solche Anordnung erhöht die Wahrscheinlichkeit, dass ein Kettenglied derart von einem oder beiden der Ableitflächenbereiche zu einem, vorzugsweise dem kleinsten, Ritzel abgelenkt wird und mit diesem in Eingriff tritt. Ein Störzustand wird somit noch effektiver verhindert, beispielsweise auch bei ungewöhnlichen Kettenbewegungen, wie diese im Gelände auftreten können.

Die zwei Ableitflächenbereiche können in Bezug auf den Mittelpunkt der Öffnung oder Aussparung bei unterschiedlichen radialen Niveaus angeordnet sein. Beispielsweise ist derjenige der beiden Ableitflächenbereiche bei einem radial größeren Niveau angeordnet, welcher in Richtung eines Leertrums der Kette weist. Eingriff mit den hinteren Ritzeln steht. Der dem Lasttrum der Kette benachbarte Ableitflächenbereich dient dazu, die Kette in Richtung hin zum kleinsten Ritzel, also weg von den Bestandteilen des Fahrradrahmens, abrutschen zu lassen. Damit soll ein Verklemmen der Kette am Fahrradrahmen vermieden werden, wodurch die Gleitbewegung der Kette in ihrer Längsrichtung weiter ermöglicht wird und eine Übertragung der Kräfte aus dem Lasttrum der Kette bis hin zu der Position, an welcher Kettenglieder der Kette in Kontakt mit der dem Leertrum der Kette benachbarten Ableitflächenbereich sind, erfolgen kann.

Der dem Leertrum der Kette benachbarte Ableitflächenbereich kann dazu dienen, die Kette in Richtung eines Ritzelzahns des kleinsten Ritzels hin abrutschen zu lassen. Da die dort anliegende Kette zum Leertrum der Kette gehört, ist diese dort ausgehend von der Kettenführung vorgespannt, wodurch sich günstige Bedingungen für das Wieder-Eingreifen von Kettengliedern der Kette mit dem kleinsten Ritzel ergeben können.

Vorzugsweise kann dann, wenn sich eine Kontaktlinie oder ein Kontaktpunkt einer Außenkante einer Außenlasche eines Kettengliedes der Kette mit dem dem Leertrum benachbarten Ableitflächenbereich auf einem radialen Niveau befindet, welches einem radialen Niveau eines Kopfkreisdurchmesser des kleinsten Ritzels oder einer vom Halterungselement ferneren Zahnkopfkante eines Zahnkopfes eines Ritzelzahns des kleinsten Ritzels entspricht, eine Innenkante einer vom Halterungselement ferneren Innenlasche eines dem Kettenglied benachbarten Kettenglieds auf dem gleichen axialen Niveau wie eine den Kopfkreisdurchmesser bestimmenden Zahnkopfkante oder die vom Halterungselement fernere Zahnkopfkante liegt oder - vorzugsweise - gegenüber dieser Zahnkopfkante einen größeren axialen Abstand von dem Halterungselement aufweist.

Eine Bedingung für das Wieder-Eingreifen der Kettenglieder in Zahnzwischenräume von Ritzeln des kleinsten Ritzels kann folglich sein, dass sich eine Innenkante einer Innenlasche (vorzugsweise einer vom Halterungselement ferneren Lasche) eines Innenlaschen-Paares eines Kettengliedes an einer Zahnkopfkante (vorzugsweise einer vom Halterungselement ferneren Lasche) eines Zahnkopfes eines Ritzelzahns des kleinsten Ritzels befindet. Besonders günstige Bedingungen können sich ergeben, wenn ein kleines Ritzel mit einer vergleichsweise geringeren Anzahl von Zähnen gewählt wird. Das Eingreifen des Zahnkopfes kann sowohl an einem Paar von Innenlaschen eines Kettengliedes als auch an einem Paar von Außenlaschen eines Kettengliedes geschehen. Es versteht sich, dass der für das Eingreifen eines Ritzelzahns zur Verfügung stehende Raum bei einem Paar von Außenlaschen größer ist als bei einem Paar von Innenlaschen.

Infolge des Wirkens des dem Leertrum benachbarten Ableitflächenbereichs verläuft ein Abschnitt der Kette wieder im Eingriff mit dem kleinsten Ritzel, nachdem ein Zahnkopf in den von einem Paar von Innen- oder Außenlaschen gebildeten Zwischenraum eingegriffen hat. Folglich ist das radiale Niveau des dem Leertrum benachbarten Ableitflächenbereichs derart zu wählen, dass bei einem Anliegen einer Außenlasche eines Kettengliedes der Kette an diesem Ableitflächenbereich, die Innenkante einer Innenlasche (vorzugsweise einer vom Halterungselement ferneren Lasche) an einem Zahnkopf des kleinsten Ritzels anliegen kann. Noch besser ist es, wenn die die Innenkante der Innenlasche (vorzugsweise die vom Halterungselement fernere Innenlasche), vorzugsweise deren oberste Ecke, die Zahnkopfkante oder eine von dem Halterungselement wegweisende Fläche der Zahnkopfkante oder die Zahnkopfspitze kontaktiert.

Für eine exakte relative Positionierung des Halterungselements zu dem Halterungsabschnitt ist denkbar, dass das Fahrrad ferner einen Anlagenflansch aufweist, welcher mit dem Halterungselement verbindbar oder verbunden ist oder von diesem ausgebildet wird. Alternativ kann der Anlagenflansch mit dem Halterungsabschnitt verbindbar oder verbunden sein oder von diesem ausgebildet werden.

Dazu kann eine zu dem Halterungsabschnitt weisende Anlagenfläche des Halterungselements an einer Gegen-Anlagenfläche des Halterungsabschnitts anliegen, wobei vorzugsweise eine aus der Anlagenfläche und der Gegen-Anlagenfläche an dem Anlagenflansch ausgebildet ist.

Vorzugsweise weisen die Anlagenfläche und die Gegen-Anlagenfläche einander entsprechende Gestaltungen auf, wodurch eine exakte Positionierung möglich ist. Dies kann ferner durch eine maßgetreue Ausgestaltung der Anlagenfläche und Gegen-Anlagenfläche erfolgen.

Vorzugsweise kann der Anlagenflansch mit der Anlagenfläche vom dem Halterungselement hervorstehen und kann die Gegen-Anlagenfläche von dem Halterungsabschnitt ausgebildet sein und gegenüber einer benachbarten Oberfläche des Halterungsabschnitts vertieft sein. Der Anlagenflansch kann in eine die Gegen-Anlagenfläche ausbildende Vertiefung eingreifen. Es versteht sich, dass für eine exakte Positionierung die Vertiefung und/oder der Anlagenflansch maßlich besonders genau hergestellt werden können.

Die Gegen-Anlagenfläche kann beispielsweise keine Lackierung oder eine Lackierung mit einer geringeren Schichtdicke als diejenige von einer an die Gegen-Anlagenfläche angrenzenden Fläche des Halterungsabschnitts aufweisen. Auf diese Weise könnte die Vertiefung im Wesentlichen durch die Dicke des Lackauftrags bzw. der Beschichtung der Oberfläche des Halterungsabschnitts erfolgen. Eine aufwändige Anpassung der Kontur des hinteren Halterungsabschnitts bei der Fertigung des Fahrradrahmens mit dem Halterungsabschnitt wäre daher nicht notwendig.

Die Erfindung wird im Folgenden anhand von in den Figuren dargestellten bzw. veranschaulichten Ausführungsbeispielen näher erläutert.

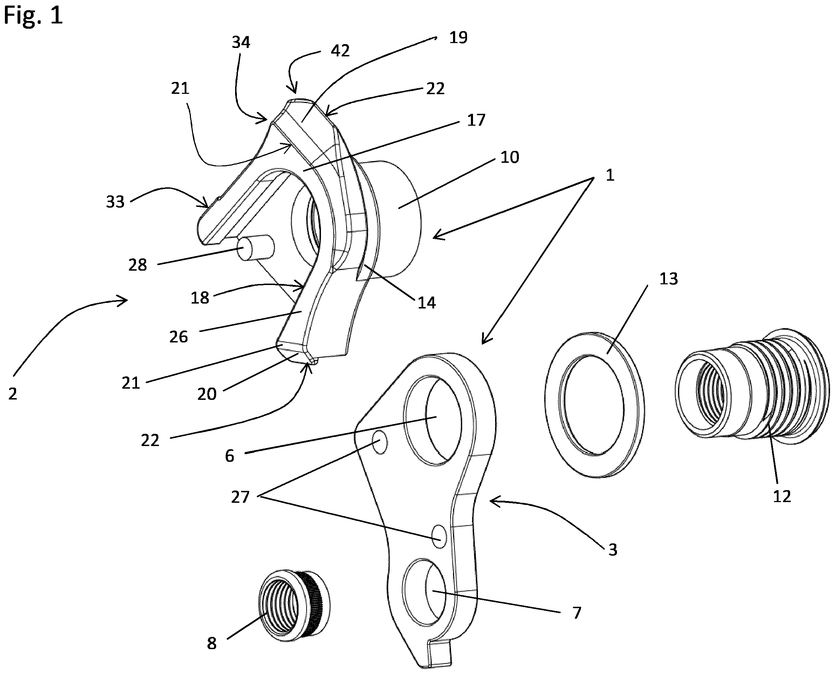

- Figur 1: zeigt eine Explosionsdarstellung eines Halterungselements gemäß einem Ausführungsbeispiel der Erfindung sowie nicht zum Halterungselement gehörende zur Montage benötigte Teile.

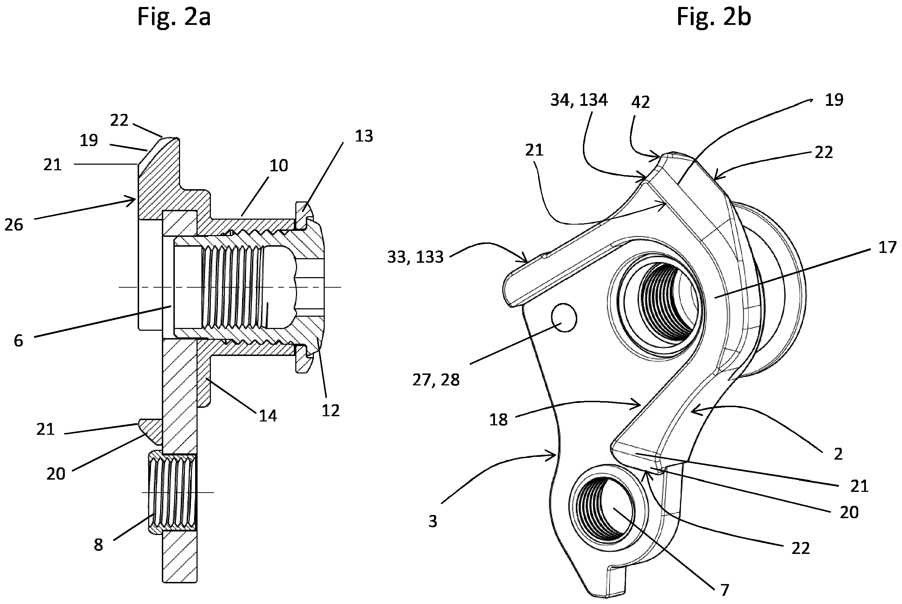

- Figur 2: zeigt die in Figur 1 dargestellten Teile in einem zusammengebauten Zustand in einer Schnittansicht (Figur 2a) und einer perspektivischen Ansicht (Figur 2b).

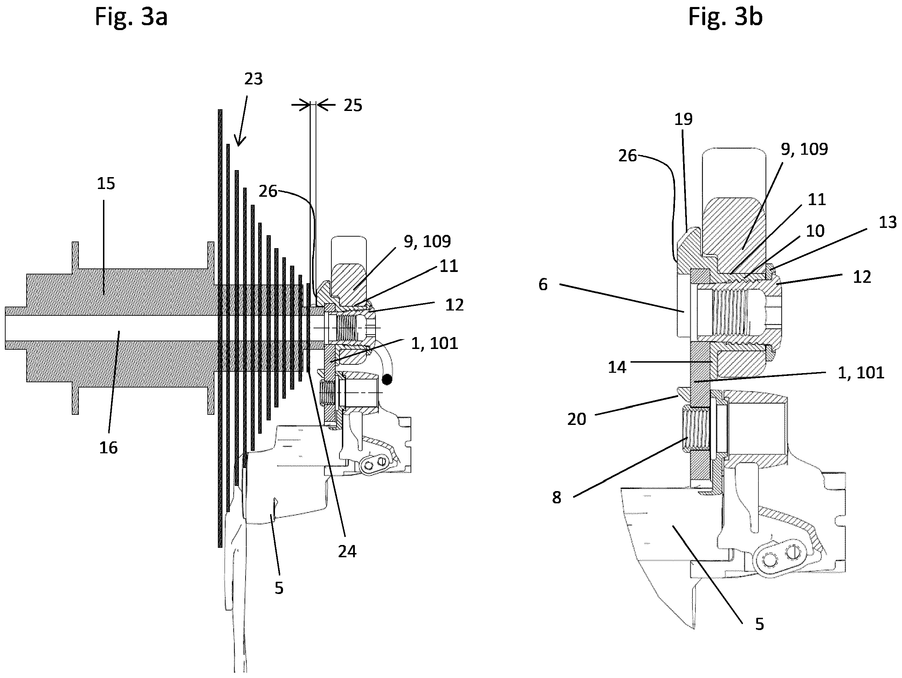

- Figur 3: zeigt eine Baugruppe, umfassend eine Hinterradnabe, ein Ritzelpaket, ein Halterungselement, eine Befestigungsschraube, eine Unterlegscheibe, eine Einschraubhülse und ein hinteres Schaltwerk, in einem montierten Zustand als Schnittansicht (Figur 3a) und eine Vergrößerung eines Teils davon (Figur 3b).

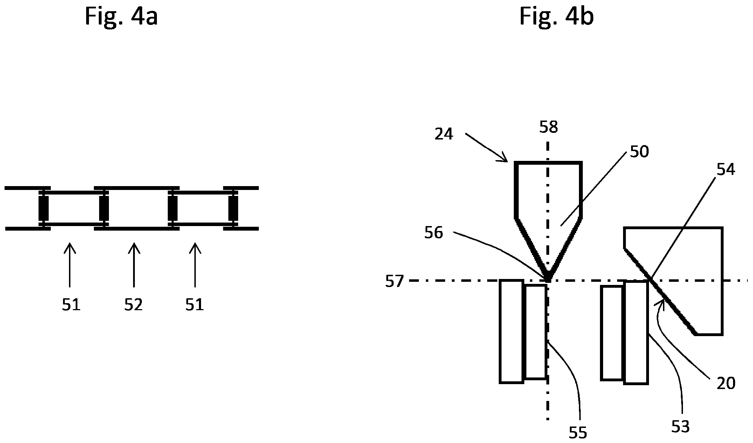

- Figur 4: zeigt eine schematische Darstellung eines Ableitflächenbereichs eines Halterungselements, einer Kette und eines Zahnkopfes eines Ritzelzahns gemäß einem Ausführungsbeispiel der Erfindung (Figur 4b) sowie eine Draufsicht auf eine schematisch dargestellte Kette (Figur 4a).

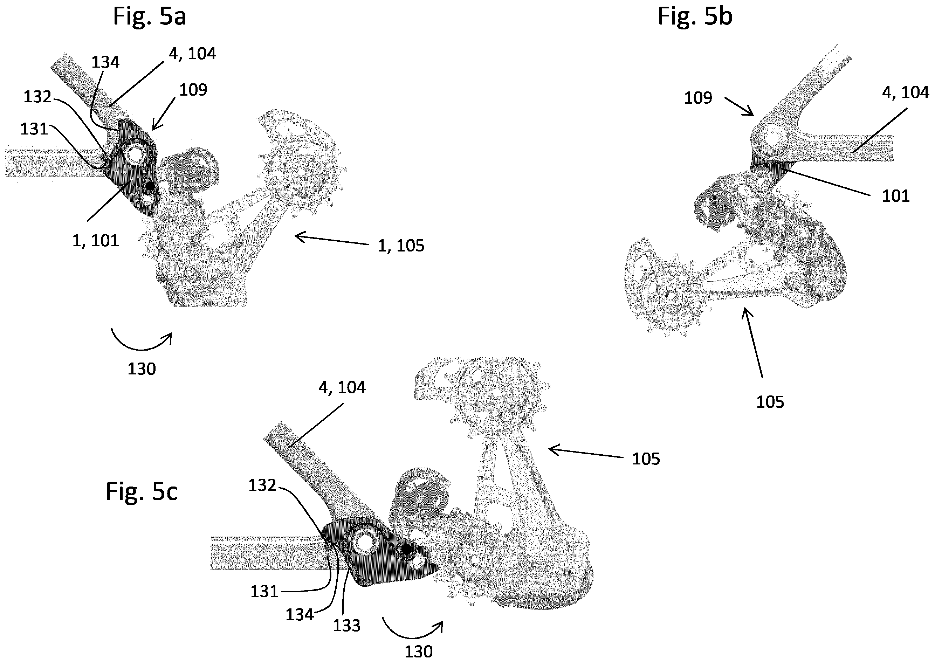

- Figur 5: zeigt ein einen Rahmen und ein hinteres Schaltwerk verbindendes Halterungselement in einer ersten Anschlag-Stellung bzw. Soll-Stellung des Halterungselements mit einem Halterungsabschnitt des Rahmens mit Blick auf eine Innenseite des Halterungsabschnitts (Figur 5a) und auf eine Außenseite des Halterungsabschnitts (Figur 5b) sowie in einer zweiten Anschlag-Stellung des Halterungselements mit dem Halterungsabschnitt mit Blick auf die Innenseite des Halterungsabschnitts (Figur 5c).

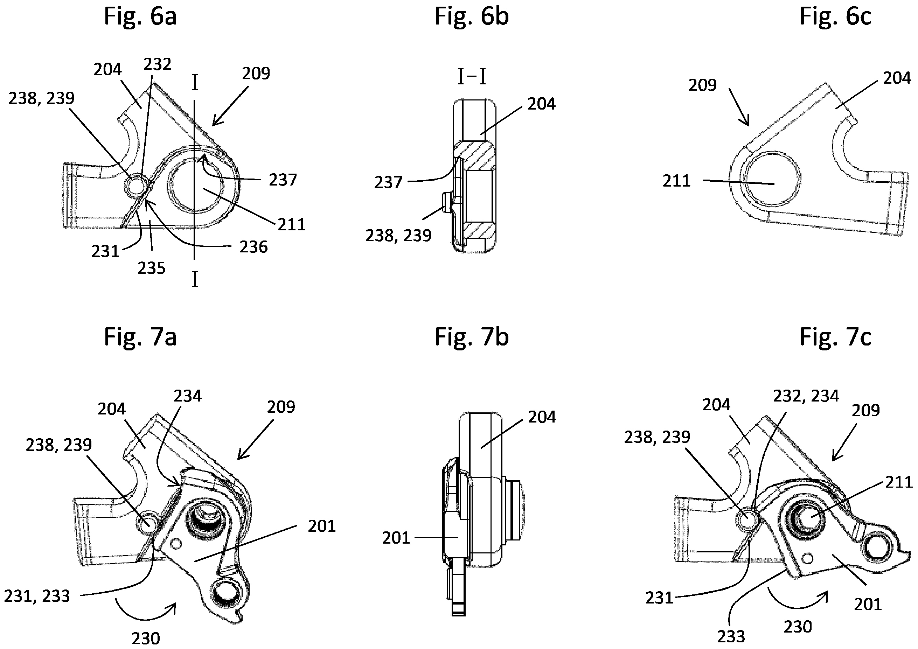

- Figur 6: zeigt ein hinteres Ende eines Rahmens mit einem gemäß einem ersten Ausführungsbeispiel ausgebildeten Halterungsabschnitt mit einer gemäß einer ersten alternative ausgebildeten Vertiefung und einem gemäß einer ersten alternative ausgebildeten Vorsprung mit Blick auf die Innenseite (Figur 6a) und die Außenseite (Figur 6c) des Halterungsabschnitts sowie einer entlang Linie I-I ausgeführten Schnittansicht (Figur 6b).
- Figur 7: zeigt den in Figur 6 dargestellten Halterungsabschnitt mit einem daran montierten Halterungselement, wobei das Halterungselement in einer ersten Anschlag-Stellung mit dem Halterungsabschnitt mit Blick auf eine Innenseite (Figur 7a) und eine Rückseite (Figur 7b) des Halterungsabschnitts sowie in einer zweiten Anschlag-Stellung mit Blick auf die Innenseite (Figur 7c) des Halterungsabschnitts dargestellt ist.

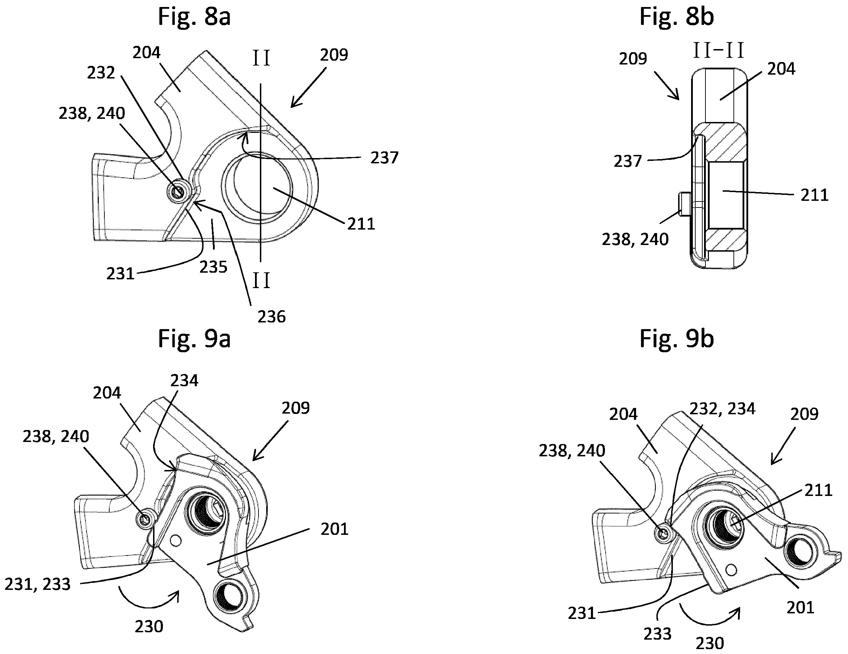

- Figur 8: zeigt ein hinteres Ende eines Rahmens mit einem gemäß einem ersten Ausführungsbeispiel ausgebildeten Halterungsabschnitt mit einer gemäß einer zweiten alternative ausgebildeten Vertiefung und einem gemäß einer zweiten alternative ausgebildeten Vorsprung mit Blick auf eine Innenseite (Figur 8a) des Halterungsabschnitts sowie einer entlang Linie II-II ausgeführten Schnittansicht (Figur 8b).
- Figur 9: zeigt den in Figur 8 dargestellten Halterungsabschnitt mit einem daran montierten Halterungselement, wobei das Halterungselement in einer ersten Anschlag-Stellung (Figur 9a) sowie einer zweiten Anschlag-Stellung (Figur 9b) mit dem Halterungsabschnitt jeweils mit Blick auf eine Innenseite des Halterungsabschnitts dargestellt ist.

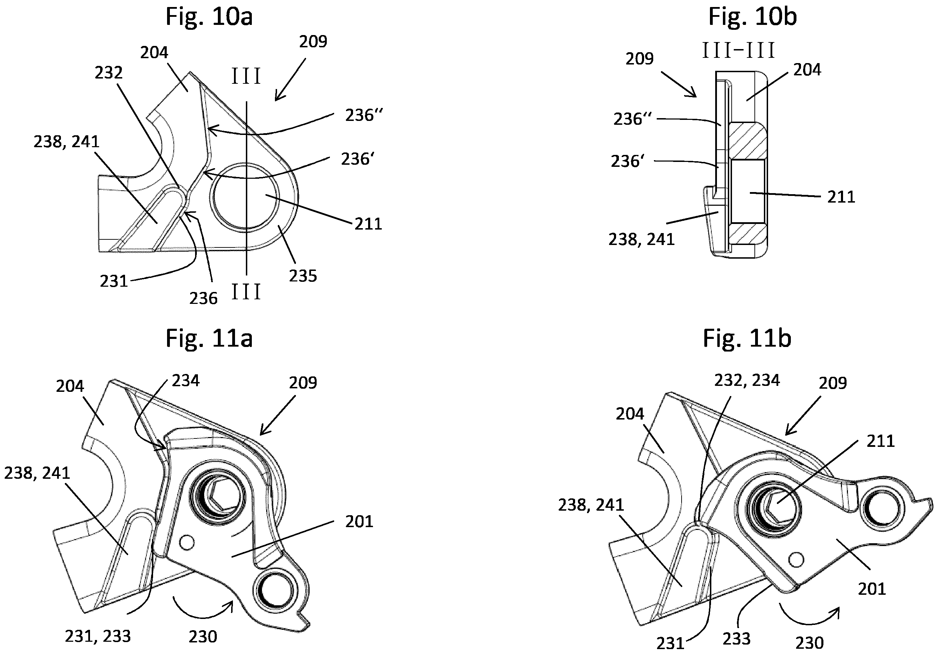

- Figur 10: zeigt ein hinteres Ende eines Rahmens mit einem gemäß einem ersten Ausführungsbeispiel ausgebildeten Halterungsabschnitt mit einer gemäß einer dritten alternative ausgebildeten Vertiefung und einem gemäß einer dritten alternative ausgebildeten Vorsprung mit Blick auf eine Innenseite (Figur 10a) des Halterungsabschnitts sowie einer entlang Linie III-III ausgeführten Seitenansicht (Figur 10b).
- Figur 11: zeigt den in Figur 10 dargestellten Halterungsabschnitt mit einem daran montierten Halterungselement, wobei das Halterungselement in einer ersten Anschlag-Stellung (Figur 11a) sowie einer zweiten Anschlag-Stellung (Figur 11b) mit dem Halterungsabschnitt mit Blick auf die Innenseite des Halterungsabschnitts dargestellt ist.

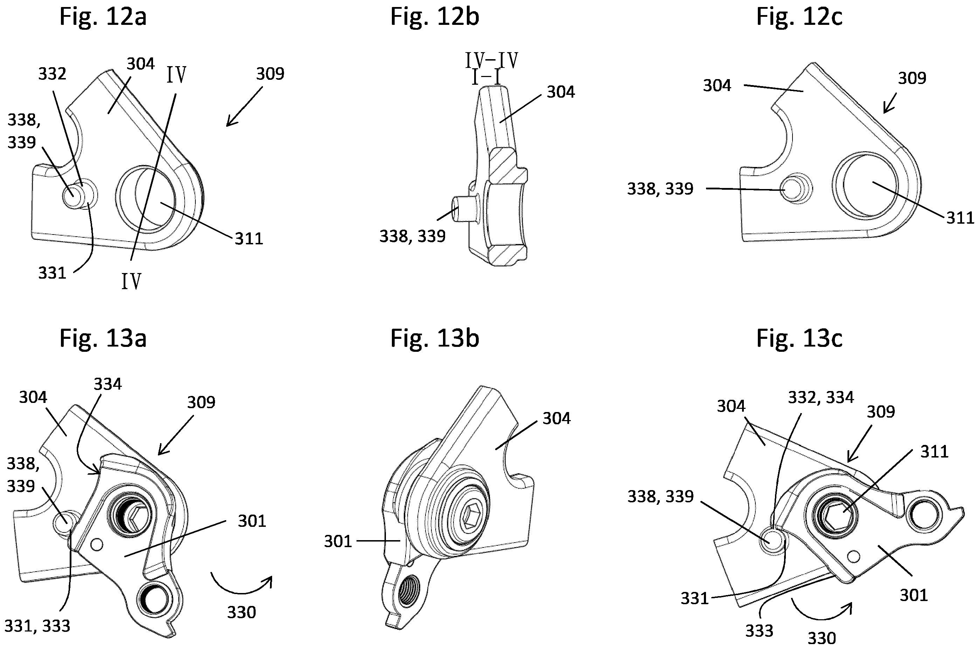

- Figur 12: zeigt ein hinteres Ende eines Rahmens mit einem gemäß einem zweiten Ausführungsbeispiel ausgebildeten Halterungsabschnitt mit einem gemäß einer ersten alternative ausgebildeten Vorsprung in einer perspektivischen Ansicht (Figuren 12a und 12c) sowie einer entlang Linie IV-IV ausgeführten Seitenansicht (Figur 12b).
- Figur 13: zeigt den in Figur 12 dargestellten Halterungsabschnitt mit einem daran montierten Halterungselement, wobei das Halterungselement in einer ersten Anschlag-Stellung (Figur 13a) und einer zweiten Anschlag-Stellung (Figur 13c) mit dem Halterungsabschnitt mit Blick auf eine Innenseite des Halterungsabschnitts sowie in einer perspektivischen Ansicht in der ersten Anschlag-Stellung (Figur 13b) dargestellt ist.

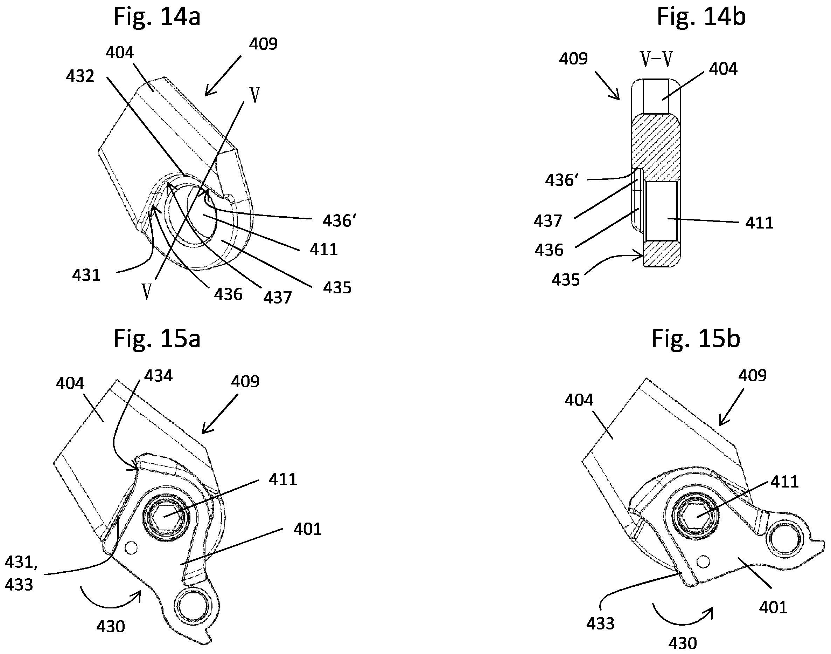

- Figur 14: zeigt ein hinteres Ende eines Rahmens mit einem gemäß einem dritten Ausführungsbeispiel ausgebildeten Halterungsabschnitt mit einer Vertiefung in einer perspektivischen Ansicht (Figur 14a) sowie einer entlang Linie V-V ausgeführten Schnittansicht (Figur 14b).
- Figur 15: zeigt den in Figur 14 dargestellten Halterungsabschnitt mit einem daran montierten Halterungselement, wobei das Halterungselement in einer ersten Anschlag-Stellung (Figur 15a) sowie in einer zweiten Anschlag-Stellung mit dem Halterungsabschnitt (Figur 15b) jeweils mit Blick auf die Innenseite des Halterungsabschnitts dargestellt ist.

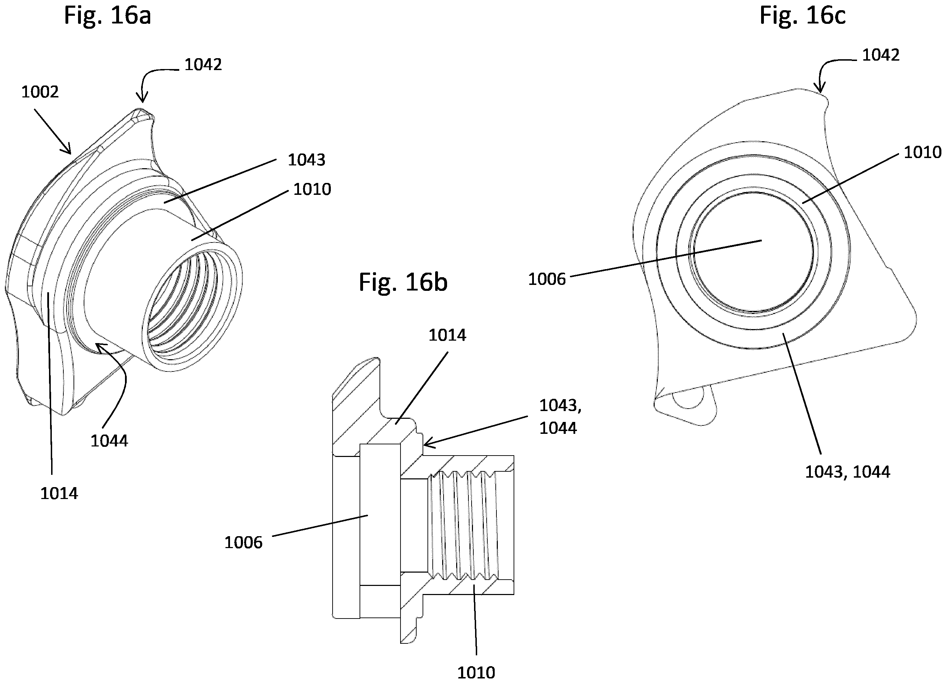

- Figur 16: zeigt ein weiteres Ausführungsbeispiel des Halterungselements in einer perspektiveschen Ansicht (Figur 16a), einer Schnittdarstellung (Figur 16b) und einer Rückansicht (Figur 16c).

Figur 1 zeigt eine perspektivische Ansicht eines erfindungsgemäßen Halterungselements 1, welches einen aus Kunststoff ausgeführten Bereich 2 sowie einen aus Metall ausgeführten Bereich 3 umfasst. Bei einer erfindungsgemäßen Ausführungsform ist der aus Kunststoff ausgeführte Bereich 2 mit dem aus Metall ausgeführten Bereich 3 fest verbunden, jedoch ist der besseren Ansicht halber in Figur 1 eine nicht verbundene Darstellung beider Bereiche 2, 3 gewählt worden. Eine Darstellung, bei welcher beide Bereiche 2, 3 miteinander verbunden sind, ist in Figur 2 ersichtlich. Das Halterungselement 1 ist dazu eingerichtet, einen Fahrradrahmen 4 mit einem hinteren Schaltwerk 5 einer Kettenschaltung zu verbinden, wie dies beispielsweise in Figur 5 ersichtlich ist. Zur Bereitstellung dieser Verbindung umfasst das Halterungselement 1 einen ersten Abschnitt, welcher eine Öffnung oder Aussparung 6 zum Aufnehmen eines Abschnitts einer Fahrradhinterradachse, beispielsweise einer Steckachse, aufweist. Ferner umfasst das Halterungselement 1 einen zweiten Abschnitt, welcher eine Montageöffnung 7 aufweist, an welcher ein Basiselement des hinteren Schaltwerks 5 festlegbar ist.

Wie in Figur 1 ersichtlich, kann der aus Metall ausgeführte Bereich 3 laschenförmig ausgebildet sein und sowohl die Öffnung oder Aussparung 6 als auch die Montageöffnung 7 ausbilden. Zur Montage des hinteren Schaltwerks 5 an das Halterungselement 1 kann eine Einschraubhülse 8 in die Montageöffnung 7 eingebracht werden und beispielsweise darin im Presssitz gehalten werden. Die Einschraubhülse 8 kann auf einer Seite einen vorstehenden Rand aufweisen, sodass ein Einschrauben des hinteren Schaltwerks 5 auf der dem Rand entgegengesetzten Seite zu einer festen Verbindung zwischen dem Halterungselement 1 und dem hinteren Schaltwerk 5 führen kann.

Zur Montage des in Figuren 1 und 2 dargestellten Halterungselements 1 an einer Innenseite eines zugeordneten hinteren Halterungsabschnitts 9 des Fahrradrahmens 4 kann das Halterungselement 1 mittels einer fluchtend mit der Öffnung oder Aussparung 6 ausgebildeten Aufnahme 10 mit dem hinteren Halterungsabschnitt 9 verbunden werden. Dazu kann die Aufnahme 10 mit einer Halterungsöffnung 11 des Halterungsabschnitts 9 in Formschluss gebracht werden, wie dies beispielsweise in Figur 3 ersichtlich ist.

Bei einer Ausführung der Aufnahme 10 aus dem aus Kunststoff ausgeführten Bereich 2 empfiehlt es sich, diesen Bereich mit einem Material zu unterstützen, dessen Festigkeit und Abriebfestigkeit höher als die von Kunststoff ist. Dies kann beispielsweise mittels einer in die Aufnahme 10 eingebrachten Befestigungsschraube 12 erfolgen, welche sich durch die Aufnahme 10 und ggf. in die Öffnung oder Aussparung 6 hinein erstreckt. Eine Verbindung zwischen der Befestigungsschraube 12 und der Aufnahme 10 kann mittels einer Schraubverbindung erfolgen, wobei vorzugsweise ein Außengewinde der Befestigungsschraube 12 in ein Innengewinde der Aufnahme 10 eingreift. Die Befestigungsschraube 12 kann also in die Aufnahme 10 eingedreht werden.

Die zum Einschrauben der Befestigungsschraube 12 in die Aufnahme 10 vorgesehene Gewindeverbindung ist vorzugsweise als Linksgewinde ausgeführt. Dies kann für die Montage des Hinterrads an den Fahrradrahmen 4 mittels einer Steckachse von Vorteil sein. Auf diese Weise kann beim Eindrehen der Befestigungsschraube 12 in die Aufnahme 10 die Befestigungsschraube 12 entgegen dem Uhrzeigersinn gedreht werden. Beispielsweise bei einem anschließenden Einfügen der Steckachse, welche sich durch die Befestigungsschraube 12 erstreckt, kann zwischen einer Außenfläche der Steckachse und einer Innenfläche der Befestigungsschraube 12 eine gewisse Reibkraft bestehen. Das heißt, eine Drehung der Steckachse kann zumindest teilweise auf die Befestigungsschraube 12 übertragen werden. Mittels des linksgängigen Gewindes wird somit vermieden, dass ein Eindrehen der Steckachse in die Befestigungsschraube 12 zu einem Losdrehen dieser führt. Stattdessen kann das Eindrehen der Steckachse auch zu einer Befestigung der Befestigungsschraube 12 in der Aufnahme 10 führen. Als weitere mögliche Ausgestaltung kann das linksgängige Gewinde mit zwei Gewindegängen ausgeführt sein, was günstige Bedingungen für den genannten Fall des Eindrehens der Befestigungsschraube 12 in die Aufnahme 10 bieten kann. Dabei kann die größere Gewindesteigung helfen, dass die Befestigungsschraube 12 nicht zu fest angezogen wird.

Für eine gleichmäßige Kraftverteilung der von dem Kopf der Befestigungsschraube 12 auf den Halterungsabschnitt 9 zu übertragenen Kraft kann eine Unterlegscheibe 13 zwischen dem Kopf der Befestigungsschraube 12 und der Aufnahme 10 sowie anliegend an den Halterungsabschnitt 9 eingebracht werden.

Nach der Montage des Halterungselements 1 an den Halterungsabschnitt 9 kann die Aufnahme 10 die Halterungsöffnung 11 des Halterungsabschnitts 9 vollständig ausfüllen und kann die Halterungsöffnung 11 an einer Seite an die Unterlegscheibe 13 bzw. den Kopf der Befestigungsschraube 12 und an der anderen Seite an den ersten Abschnitt des Halterungselements 1 angrenzen.

In einem möglichen Ausführungsbeispiel des Halterungselements 1 kann der an der Innenseite des Halterungsabschnitts 9 anliegende Bereich des Halterungselements 1 aus dem aus Kunststoff ausgeführten Bereich 2 ausgebildet sein. In einer bevorzugten Ausführung kann bei der Herstellung des Halterungselements 1 dieser Bereich unterschiedlich dick ausgeführt sein und als ein Abstandshalter 14 fungieren, welcher den aus Metall ausgeführten Bereich 3 relativ zu dem zugeordneten hinteren Halterungsabschnitt 9 des Fahrradrahmens 4 definiert positioniert.

Für die Montage des Hinterrads beispielsweise mittels einer Steckachse ist diese zumindest durch die Befestigungsschraube 12 und einer mit einem Hinterrad verbundenen Hinterradnabe 15, wie beispielsweise in Figur 3 ersichtlich, zu führen. Folglich kann bei dieser Montage die von der Hinterradachse gebildete Steckachsenführung 16 fluchtend mit der Öffnung oder Aussparung 6 sowie einer Durchgangsöffnung der Befestigungsschraube 12 ausgerichtet werden. Zur Erleichterung dieser Ausrichtung kann das Halterungselement 1 einen, beispielsweise in Richtung der Hinterradnabe 15, axial vorstehenden Kragen 17 aufweisen, welcher eine Führungsöffnung oder Führungsaussparung 18 aufweisen kann. Diese im vorliegenden Fall in einer U-Form dargestellte Führungsöffnung oder Führungsaussparung 18 kann derart ausgebildet sein, dass eine Hülse der Steckachsenführung 16 der Hinterradnabe 15 entlang von Flächen der Führungsöffnung oder Führungsaussparung 18 gleiten kann bis diese in der Wölbung des U's anliegt, wodurch eine fluchtende Ausrichtung der Steckachsenführung 16 mit der Öffnung oder Aussparung 6 erzielt werden kann.

Das Halterungselement 1 kann - wie bei den in den Figuren dargestellten Ausführungsbeispielen realisiert - einen Ableitflächenbereich 19, 20 aufweisen, welcher wenigstens von einem ersten Rand 21 und einem gegenüberliegenden zweiten Rand 22 begrenzt sein kann. Der Ableitflächenbereich 19, 20 zwischen dem ersten Rand 21 und dem zweiten Rand 22 ist beispielsweise abfallend in Richtung eines Ritzelpakets 23 ausgebildet, wie in Figur 3 ersichtlich. Auch wenn in Figur 3 aus Gründen einer besseren Übersicht die Fahrradkette nicht dargestellt ist, ist klar verständlich, dass bei einem funktionstüchtigen Fahrrad eine solche mit einem Ritzel des Ritzelpakets 23 in Eingriff steht und vor dessen Umlenkung um eines der Ritzel herum in einer zur Darstellungsebene senkrechten Richtung verläuft.

In einem Störzustand, beispielsweise, wenn ein Schaltvorgang zum Wechseln des Gangs, also bei einem Umschalten der Kette von einem Ritzel auf ein anderes Ritzel, oder bei einer Störung durch Umgebungseinflüsse, beispielsweise Sträucher in einem Waldgebiet, kann die Kette außer Eingriff mit den Ritzeln des Ritzelpakets 23 gelangen. Bedingt durch die Schwerkraft und die Kettenspannung kann sich die Kette in einem solchen Störzustand in Richtung des Halterungsabschnitts 9 bewegen und kontaktiert dabei mit hoher Wahrscheinlichkeit den Ableitflächenbereich 19, 20. In solch einem Fall kann die außer Eingriff mit dem Ritzelpaket geratene Kette und in Kontakt mit dem Ableitflächenbereich gelangte Kette quer zu ihrer Längsrichtung, welche senkrecht in Bezug auf die Darstellungsebene ist, in Richtung des Ritzelpakets abrutschen und somit erneut mit einem Ritzel, vorzugsweise dem kleinsten Ritzel 24, des Ritzelpakets 23 in Eingriff gelangen. Vorzugsweise sind dafür zwei Ableitflächenbereiche 19, 20 vorgesehen, welche beide dazu eingerichtet sind, ein Abrutschen der Kette quer zu ihrer Längsrichtung in Richtung des Ritzelpakets 23 zu ermöglichen.

Der Ableitflächenbereich 19, 20 kann somit einen Störzustand des Fahrrads ohne manuelles Eingreifen innerhalb kurzer Zeit beheben. Besonders effektiv kann dies erfolgen, wenn zudem oder alternativ ein Verklemmen der Kette zwischen einer in Richtung des Ritzelpakets 23 weisenden Außenfläche 26 des Halterungselements 1 vermieden wird. Dazu kann ein Abstand 25 zwischen der in Richtung des Ritzelpakets 23 weisenden Außenfläche 26 des Halterungselements 1 und dem kleinsten Ritzel 24 derart sein, dass die Kette nicht dazwischen gelangen kann. Dieser Abstand 25 kann beispielsweise mittels der Ausführung des Abstandshalters 14 variiert werden. Beispielsweise würde eine dickere Ausgestaltung des Abstandshalters 14 bei einer sonst gleichbleibenden Gestaltung des Halterungselements 1 die Außenfläche 26 weiter in Richtung des kleinsten Ritzels 24 bewegen, also den Abstand 25 verkleinern.

In dem in den Figuren dargestellten Ausführungsbeispielen ist der Ableitflächenbereich 19, 20 aus Kunststoff ausgebildet. Dies ist eine vorteilhafte Ausführung, da Kunststoff sehr gut formbar ist und somit an unterschiedliche Ritzelpakete 23 und Halterungsabschnitte 9 anpassbar ist. Es versteht sich, dass jedoch auch eine Ausführung möglich ist, bei welcher die Ableitflächenbereiche 19, 20 aus dem aus Metall ausgeführten Bereich 3 ausgebildet sind.

Etwas genauer betrachtet, bedeutet ein in Eingriff Stehen einer Kette mit einem Ritzel des Ritzelpakets 23, ein Eingreifen eines Ritzelzahns 50 zwischen ein Paar von Innenlaschen 51 oder in Paar von Außenlaschen 52 einer Kette, welche schematisch anhand von vier Kettengliedern in Figur 4a dargestellt sind. Im Betriebszustand läuft die Kette zumindest um ein vorderes Kettenrad und ein Ritzel des hinteren Ritzelpakets 23 und kann gemäß der auf sie wirkenden Kräfte in Abschnitte, sogenannte Trums (Lasttrum und Leertrum), untergeteilt werden. In dem in Figur 3 dargestellten Beispiel ist vorzugsweise der eine der zwei Ableitflächenbereiche 19 ein dem Lasttrum benachbarter Ableitflächenbereich 19 und der andere ein dem Leertrum benachbarter Ableitflächenbereich 20. **In** Figur 4b ist letzterer vergrößert dargestellt, um die Funktionsweise dieses Ableitflächenbereichs 20 genauer zu erläutern.

Figur 4b zeigt einen Zustand, bei welchem die Kette mit einer dem Halterungselement 1 näheren Außenlasche 53, vorzugsweise mittels ihrer äußeren Kante, an dem dem Leertrum benachbarten Ableitflächenbereich 20 anliegt und diesen an einer Kontaktlinie oder einem Kontaktpunkt 54 kontaktiert, während eine dem Halterungselement 1 fernere Innenlasche 55 in Kontakt mit dem Ritzelzahn 50, vorzugsweise mit einer vom Halterungselement 1 ferneren Zahnkopfkante 56, sein kann. Die Zahnkopfkante 56 kann ferner als langgezogene Spitze gestaltet sein und die die dem Halterungselement 1 fernere Innenlasche 55 kann dann mit dieser Spitze in Kontakt sein.

**In** einem wünschenswerten Zustand kann die Kontaktlinie oder der Kontaktpunkt 54 auf einem radialen Niveau 57 sein, welches einem radialen Niveau 57 eines Kopfkreisdurchmesser des kleinsten Ritzels oder einer vom Halterungselement 1 ferneren Zahnkopfkante 56 eines Zahnkopfes eines Ritzelzahns 50 des kleinsten Ritzels 24 entspricht. Ferner kann die Innenkante einer vom Halterungselement 1 ferneren Innenlasche 55 eines dem Kettenglied 52 benachbarten Kettenglieds 51 auf dem gleichen axialen Niveau 58 liegen wie eine den Kopfkreisdurchmesser bestimmende Zahnkopfkante 56 oder die vom Halterungselement 1 fernere Zahnkopfkante 56 oder weist - vorzugsweise - gegenüber dieser Zahnkopfkante 56 einen größeren axialen Abstand von dem Halterungselement 1 auf. Das heißt, die vom Halterungselement 1 fernere Zahnkopfkante 56 kann auf der Innenlasche 55 aufliegen, wobei wünschenswerterweise diese Zahnkopfkante 56 an der vom Halterungselement 1 ferneren Innenkante der Innenlasche 55 anliegen kann, wie dies in Figur 4b gezeigt ist. Der dem Leertrum benachbarte Ableitflächenbereich 20 kann somit ein hineingleiten eines Ritzelzahn 50 zwischen ein Paar von Innenlaschen 51 als auch zwischen ein Paar von Außenlaschen 52 ermöglichen, wodurch die Kette wieder in Eingriff mit dem kleinsten Ritzel 24 gelangen kann.

Die vorstehenden Erläuterungen zeigen, dass auf den aus Kunststoff ausgeführten Bereich 2 bei der Montage und/oder bei der Benutzung des Fahrrads mit dem Halterungselement 1 diverse Kräfte einwirken können. Für eine erhöhte Sicherheit empfiehlt es sich daher, darauf zu achten, dass bei den verschiedenen Krafteinwirkungen auf den aus Kunststoff ausgeführten Bereich 2 die eingangs angesprochene feste Verbindung zwischen dem aus Kunststoff ausgeführten Bereich 2 und dem aus Metall ausgeführten Bereich 3 stets gewährleistet ist. Zur Erzielung dieser Vorgabe wird vorgeschlagen, den aus Kunststoff ausgeführten Bereich 2 um den aus Metall ausgeführten Bereich 3 zu spritzen. Eine noch bessere Verbindung ist erzielbar, wenn der aus Metall ausgeführte Bereich 3 ein oder mehrere Durchgangslöcher oder Ausnehmungen 27 aufweist, welche mit Kunststoff 28 ausfüllbar sind, welcher dem aus Kunststoff ausgeführten Bereich 2 zugehörig ist. Der Kunststoff kann während des Spritzgießens in die Durchganslöcher oder Ausnehmungen fließen, diese ausfüllen und für eine feste Verbindung beider Bereiche 2, 3 nach dem Auskühlen des Kunststoffs sorgen. In dem in Figuren 1 und 2 dargestellten Ausführungsbeispiel sind zwei Durchgangslöcher 27 in dem aus Metall ausgeführten Bereich 3 vorgesehen, welche mit in diese hineingeflossenen Teile 28 des aus Kunststoff ausgeführten Bereichs 2 ausgefüllt sind.

Im Folgenden wird ein **Fahrrad** beschrieben, dessen Fahrradrahmen 104 und Halterungselement 101, welches diesen Fahrradrahmen 104 mit einem hinteren Schaltwerk 105 einer Kettenschaltung verbindet, derart ausgelegt sind, dass eine Schädigung der zuvor genannten Teile in diversen Störsituationen vermieden werden kann.

Bei dem Halterungselement 101 kann es sich auch um das zuvor beschriebene Halterungselement 1 handeln. Alternativ kann es sich um ein Halterungselement handeln, welches im Wesentlichen wie das Halterungselement 1 aufgebaut ist, bei welchen jedoch der aus Kunststoff ausgeführte Bereich 2 mit dem aus Metall ausgeführten Bereich 3 lösbar verbunden sein können. Komponenten bzw. Teile, welche sowohl in dem Halterungselement 1 als auch in dem Halterungselement 101 vorhanden sind, und/oder mit diesen Zusammenwirken, sind im Folgenden mit 100 erhöhten Bezugszeichen bezeichnet. Die zuvor beschriebenen Ausführungen gelten, wenn dies nicht anders erwähnt wird, weiterhin und werden nicht nochmals wiederholt.

Das Fahrrad kann, abgesehen von dessen Fahrradrahmen 104 und Halterungselement 101, ein aus dem Stand der Technik bekanntes Fahrrad sein, welches ein mittels einer Kettenschaltung antreibbares Hinterrad aufweist, wobei eine mit dem Hinterrad verbundene Hinterradnabe 115 ein Ritzelpaket 123 der Kettenschaltung aufweist. Entsprechend dem jeweils vom Bediener gewählten Gang steht die Kette mit einem ausgewählten Ritzel des Ritzelpakets 123 in Eingriff und kann mittels der Kettenschaltung, beispielsweise durch gezielte Bewegung des hinteren Schaltwerks 105, zwischen den Ritzen des Ritzelpakets 123 bewegt werden.

Als Halterungselement 101 kann eines verwendet werden, welches eine Öffnung oder Aussparung 106, in welcher ein Abschnitt einer Fahrradhinterradachse des Hinterrads aufgenommen ist, und welches eine Montageöffnung 107 aufweist, an welcher ein Basiselement des hinteren Schaltwerks 105 festgelegt ist. In den im Folgenden betrachteten Ausführungsbeispielen ist das mit dem hinteren Schaltwerk 105 verbundene Halterungselement 101 an einer Innenseite eines zugeordneten hinteren Halterungsabschnitts 109 des Fahrradrahmens 104 verbunden.

Figur 5 zeigt, wie die zuvor angesprochene Schädigung des hinteren Halterungsabschnitts 109, des Halterungselements 101 und des hinteren Schaltwerks 105 gemäß einem Ausführungsbeispiel der Erfindung vermieden werden kann. An dieser Stelle wird darauf hingewiesen, dass bei den Darstellungen des hinteren Schaltwerks 105 in Figuren 5a und c die auf das hintere Schaltwerk 105 durch die Kette übertragenen Kräfte nicht berücksichtigt sind, sodass die Position von Kettenführungs- und Kettenspannröllchen des hinteren Schaltwerks 105 in der Realität von den Darstellungen in Figuren 5a und c abweichen kann.

In dem normalen Betriebszustand befindet sich das Halterungselement 101 in einer in Figuren 5a,b ersichtlichen Soll-Stellung, in welcher das Halterungselement 101 an dem zugeordneten hinteren Halterungsabschnitt 109 reibschlüssig festgelegt oder festlegbar ist. Die reibschlüssige Befestigung des Halterungselements 101 kann mittels einer Befestigungsschraube 112 erfolgen, welche von einer Außenseite des hinteren Halterungsabschnitts 109 durch eine Halterungsöffnung 111 davon sowie durch die Öffnung oder Aussparung 106 des Halterungselements 101 durchgeführt wird und in eine Aufnahme 110 eingreift. Beispielsweise kann die zuvor beschriebene Befestigung mittels der Befestigungsschraube 12, der Unterlegscheibe 13 und der Aufnahme 10 verwendet werden.

Wie am besten in Figuren 3a,b ersichtlich ist, kann sich somit eine reibschlüssige Haltekraft zwischen dem hinteren Halterungsabschnitt 109 und dem Halterungselement 101 zwischen einander anliegenden Flächen beider Elemente ergeben. Bei einer Verwendung des zuvor beschriebenen Halterungselements 1 liegen beispielsweise die Außenfläche der Aufnahme 10 und die dem Halterungsabschnitt 9 zugewandte Fläche des Abstandshalters 14 reibschlüssig an dem hinteren Halterungsabschnitt 9, 109 an und können somit eine reibschlüssige Haltekraft zwischen dem hinteren Halterungsabschnitt 109 und dem Halterungselement 101 bereitstellen.

Im Falle eines Anlegens einer diese reibschlüssige Haltekraft übersteigenden Verdrehkraft, in Figuren 5a, c in Richtung des Pfeils 130 im GegenUhrzeigersinn, ist das Halterungselement 101 in Bezug auf den Halterungsabschnitt 109 ausgehend von der in Figuren 5 a,b dargestellten Soll-Stellung (ersten Anschlag-Stellung) in Richtung einer in Figur 5c dargestellten Anschlag-Stellung (zweiten Anschlag-Stellung) verdrehbar. Auch wenn in Figur 5c eine vollständige Verdrehung bis zu der zweiten Anschlag-Stellung darstellt ist, kann die Verdrehung auch in einer nicht dargestellten Stellung zwischen der in Figur 5a dargestellten Soll-Stellung und der in Figur 5c dargestellten zweiten Anschlag-Stellung stoppen.

Der Verdrehwinkel des Halterungselements 101 kann von zwei Drehanschlägen 131, 132 begrenzt werden. Einer der Drehanschläge kann ein Vorwärts-Drehanschlag 131 und der andere ein Rückwärts-Drehanschlag 132 sein. Der Vorwärts-Drehanschlag 131 kann eine Vorwärtsdrehung, also in Figur 5a eine Drehung im Uhrzeigersinn, des Halterungselements 101 ermöglichen, bis dieses sich in einer der Soll-Stellung entsprechenden ersten Anschlag-Stellung im Anschlag mit dem Vorwärts-Drehanschlag 131 befindet. In der Praxis kann der Vorwärts-Drehanschlag 131 als Positionierungshilfe bei der Montage des Halterungselements 101 an den Halterungsabschnitt 109 dienen und eine definierte Positionierung beider Elemente zueinander ermöglichen.

Der Rückwärts-Drehanschlag 132 kann eine Verdrehung in Richtung 130 im Falle des Anlegens der die reibschlüssige Haltekraft übersteigenden Verdrehkraft begrenzen. Figur 5c zeigt das Halterungselement 101 in der zweiten Anschlag-Stellung im Anschlag mit dem Rückwärts-Drehanschlag 132. Der Rückwärts-Drehanschlag 132 verhindert eine zu einer Beschädigung des hinteren Schaltwerks 105 führende Verdrehung des Halterungselements 101, welche durch eine sich aufgrund der Verdrehung des an dem Halterungselement 101 befestigten hinteren Schaltwerks 105 ergebende erhöhte Kettenspannung verursacht werden kann.

In der ersten Anschlag-Stellung, wie in Figur 5a gezeigt, liegt eine Anschlagsformation 133 des Halterungselements 101 an einer Gegenanschlagsformation des Vorwärts-Drehanschlags 131 an. In der zweiten Anschlag-Stellung, wie in Figur 5c gezeigt, liegt eine zweite Anschlagsformation 134 des Halterungselements 101 an der Gegenanschlagsformation des Rückwärts-Drehanschlags 132 an.

Das eingangs beschriebene Halterungselement 1 kann die genannten Anschlagsformationen als erste Anschlagsformation 33 und zweite Anschlagsformation 34 aufweisen und bei der Verwendung dieses Halterungselements 1 ist die erste Anschlagsformation 33, 133 und/oder die zweite Anschlagsformation 34, 134 vorzugsweise aus dessen aus Kunststoff ausgeführten Bereich 2 ausgebildet. Auf diese Weise können die Anschlagsformationen 33, 34, 133, 134 mittels des leicht formbaren Kunststoffs an die entsprechenden Gegenanschlagsformationen angepasst werden. Auch kann durch die elastische Eigenschaft des Kunststoffs ein Aneinanderschlagen von Anschlagsformation und Gegenanschlagsformation gedämpft werden. Wie in Figur 1 ersichtlich, kann die erste Anschlagsformation 33, 133 und/oder die zweite Anschlagsformation 34, 134 von dem axial vorstehenden Kragen 10 ausgebildet sein.

Im Folgenden werden Ausführungsbeispiele des Halterungsabschnitts mit verschiedenen alternativen Ausführungen der Drehanschläge 131, 132, 231, 232, 331, 332, 431, 432 beschrieben. Die Bezugszeichen jedes Ausführungsbeispiels sind jeweils um 100 erhöht. Die zuvor beschriebenen Funktionalitäten der Komponenten bzw. Teile entsprechen den vorherigen Ausführungen und werden nicht nochmal wiederholt.

Alle der im Folgenden beschriebenen und in den Figuren 6 bis 15 gezeigten Ausführungsbeispiele eines hinteren Halterungsabschnitts 209, 309, 409 weisen -wie herkömmlich bekannt- eine Halterungsöffnung 211, 311, 411 zur Befestigung eines Halterungselements 201, 301, 401 daran auf.

**In** den Figuren 6 bis 11 ist der Halterungsabschnitt 209 gemäß einem ersten Ausführungsbeispiel dargestellt, bei welchem eine Gegenanschlagsformation des Vorwärts-Drehanschlags 231 an einem Rand einer Vertiefung 235 des Halterungsabschnitts 209 und eine Gegenanschlagsformation des Rückwärts-Drehanschlags 232 an einem mit dem Halterungsabschnitt 209 verbundenen Vorsprung 238 ausgebildet ist.

Eine erste mögliche Ausgestaltung der Vertiefung 235 ist in Figur 6 gezeigt, bei welcher ein Rand dieser in einem ersten Teilstück 236 einen geraden Verlauf und in einem sich daran anschließenden zweiten Teilstück 237 einen gebogenen Verlauf um die Halterungsöffnung 211 herum aufweisen kann, wobei vorzugsweise die beiden Teilstücke 236, 237 ohne einen oder mit geringem Versatz ineinander übergehen. Vorzugsweise wird die Gegenanschlagsformation des Vorwärts-Drehanschlags 231 von dem ersten Teilstück 236 des Randes der Vertiefung 235 mit geradem Verlauf ausgebildet.

Wie in Figur 6 ersichtlich, kann ein integral/fest mit dem Halterungsabschnitt 209 verbundener, vorzugsweise runder, Vorsprung 238, 239 die Gegenanschlagsformation des Rückwärts-Drehanschlags 232 bilden. Vorzugsweise grenzt der Vorsprung 238, 239 an den Rand der Vertiefung 235, vorzugsweise an dessen Übergangsbereich zwischen dem ersten Teilstück 236 und dem zweiten Teilstück 237, an.

Figur 7 zeigt den in Figur 6 dargestellten Halterungsabschnitt 209 mit dem daran befestigten Halterungselement 201. Bei der in Figur 7a dargestellten Ansicht mit Blick auf eine Innenseite des Halterungsabschnitts 209 befindet sich das Halterungselement 201 in der ersten Anschlag-Stellung bzw. Soll-Stellung mit dem Halterungsabschnitt 209. Ferner ist ersichtlich, dass sich die erste Anschlagsformation 233 des Halterungselements 201 im Anschlag mit der von dem Rand der Vertiefung 235 ausgebildeten Gegenanschlagsformation des Vorwärts-Drehanschlags 231 befindet. Eine Figur 7a entsprechende Rückansicht auf das an dem Halterungsabschnitt 209 befestigten Halterungselements 201 ist in Figur 7b dargestellt.

Die Position des Halterungselements 201, nachdem dieses in Richtung der Rückwärtsdrehrichtung 230 in die zweite Anschlag-Stellung verdreht wurde, ist in Figur 7c dargestellt. Es ist ersichtlich, dass sich in dieser zweiten Anschlag-Stellung die zweite Anschlagsformation 234 des Halterungselements 201 im Anschlag mit der Gegenanschlagsformation des Rückwärts-Drehanschlags 232 befindet, welche von dem Vorsprung 238, 239 ausgebildet wird. Es ist auch ersichtlich, dass der Teil des Halterungselements 201, welcher die zweite Anschlagsformation 234, vorzugsweise an einer Auskragung 242 davon, bereitstellt, über die Vertiefung 235 hinausragt. Eine solche Auskragung 42 kann auch von dem eingangs beschriebenen Halterungselement 1, vorzugsweise dessen axial vorstehendem Kragen 10, bereitgestellt werden.

Figur 8 zeigt eine zweite mögliche Ausgestaltung der Vertiefung 235, bei welcher das erste gerade Teilstück 236 ihres Randes mit einem Versatz in das zweite gebogene Teilstück 237 ihres Randes übergeht. Wie in Figur 9a ersichtlich, kann die erste Anschlagsformation 233 des Halterungselements 201 an dem geraden ersten Teilstück 236 des Randes der Vertiefung 235 Anliegen, wenn sich das Halterungselement 201 in der ersten Anschlag-Stellung bzw. Soll-Stellung befindet.

Der in Figur 6 gezeigte integral/fest mit dem Halterungsabschnitt 209 verbundene Vorsprung 239 kann alternativ als ein mit dem Halterungsabschnitt 209 lösbar verbundener Vorsprung 240 ausgeführt sein, wie in Figur 8 gezeigt. Beispielsweise kann der Halterungsabschnitt 209 eine Aussparung aufweisen, in welche der lösbare Vorsprung 240 eingeschraubt oder mittels Presspassung eingepresst werden kann. Beispielsweise kann auf diese Weise ein an das Halterungselement 201 angepasster Vorsprung 240 bei der Montage des Halterungselements 201 an den Halterungsabschnitt 209 ausgewählt und mit dem Halterungsabschnitt 209 verbunden werden. Der lösbare Vorsprung 240 kann dann, wie zuvor in Bezug auf Figuren 6 und 7 beschrieben, die Gegenanschlagsformation des Rückwärts-Drehanschlags 232 ausbilden, welche sich, wie in Figur 9b gezeigt, in der zweiten Anschlag-Stellung im Anschlag mit der zweiten Anschlagsformation 234 des Halterungselements 201 befindet.

Der Vorsprung 238 kann - unabhängig von dessen Ausbildung als integral oder lösbar mit dem Halterungsabschnitt 209 verbundener Vorsprung 239, 240 - angrenzend an den in Figur 8a ersichtlichen Versatz zwischen dem ersten Teilstück 236 und dem zweiten Teilstück 237 des Randes der Vertiefung 235 angeordnet sein.

Figur 10 zeigt eine dritte mögliche Ausgestaltung der Vertiefung 235, dessen Rand drei gerade Teilstücke 236, 236', 236" umfassen kann, wobei zwischen dem ersten geraden Teilstück 236 und dem zweiten geraden Teilstück 236' und/oder zwischen dem zweiten geraden Teilstück 236' und dem dritten geraden Teilstück 236" ein Versatz angeordnet sein kann. Diese dritte mögliche Ausgestaltung, vorzugsweise auch die zweite und/oder erste mögliche Ausgestaltung, der Vertiefung 235 sieht einen Abstand zwischen dem Rand der Vertiefung und einer Begrenzung der Halterungsöffnung 211 vor.

Ferner zeigt Figur 10 eine dritte mögliche Ausgestaltung des Vorsprungs 238 als einen langgezogenen Vorsprung 241. Beispielsweise kann sich ein Randbereich des langgezogenen Vorsprungs 241 benachbart zu dem ersten Teilstück 236, vorzugsweise angrenzend an das erste Teilstück 236, erstrecken. Der langgezogene Vorsprung 241 kann, wie in der Schnittdarstellung in Figur 10b ersichtlich, in einem unteren Teilbereich das erste Teilstück 236 des Randes der Vertiefung 135 ausbilden und in einem oberen Teilbereich von einer Oberfläche des Halterungsabschnitts 209 hervorstehen.

Figur 11a zeigt den langgezogenen Vorsprungs 241 in der ersten Anschlag-Stellung bzw. Soll-Stellung, bei welcher sich die erste Anschlagsformation 233 des Halterungselements 201 im Anschlag mit dem ersten Teilstück 236 des Randes der Vertiefung 235, also dem unteren Teilbereich des langgezogenen Vorsprungs 241, befindet. Gleichzeitig kann die erste Anschlagsformation 233 auch an den oberen Teilbereich des langgezogenen Vorsprungs 241 anschlagen.

Ferner kann der langgezogene Vorsprung 241 einen abgerundeten Bereich aufweisen, an welchem vorzugsweise die Gegenanschlagsformation des Rückwärtsdrehanschlags 232 ausgebildet ist und an welchen die zweite Anschlagsformation 234 des Halterungselements 201 in der zweiten Anschlag-Stellung anschlagen kann, wie in Figur 11b gezeigt.

In den Figuren 12 und 13 ist der Halterungsabschnitt 309 gemäß einem zweiten Ausführungsbeispiel dargestellt, bei welchem die Gegenanschlagsformation des Vorwärts-Drehanschlags 331 als auch die Gegenanschlagsformation des Rückwärts-Drehanschlags 332 an einem mit dem Halterungsabschnitt 209 verbundenen Vorsprung 338 ausgebildet ist. Der Vorsprung kann, wie in Bezug auf das erste Ausführungsbeispiel ausgeführt, ein mit dem Halterungsabschnitt 309 integral/fest verbundener Vorsprung 239 oder ein mit dem Halterungsabschnitt 309 lösbar verbundener Vorsprung 240 mit einer runden oder/und langgezogenen Form oder einer anderen geeigneten Form sein. Vorzugsweise weist in diesem zweiten Ausführungsbeispiel des Halterungsabschnitts 309 dieser keine Vertiefung und folglich auch keinen Rand der Vertiefung auf.

Das Halterungselement 301 ist in Figuren 13a,b in der ersten Anschlag-Stellung bzw. Soll-Stellung und in Figur 13c in der zweiten Anschlag-Stellung dargestellt. In diesen Figuren ist ersichtlich, dass der Vorsprung 338 die Gegenanschlagsformation des Vorwärts-Drehanschlags 231, an welche die erste Anschlagsformation 333 des Halterungselements 301 in der ersten Anschlag-Stellung bzw. Soll-Stellung anschlagen kann, als auch die Gegenanschlagsformation des Rückwärts-Drehanschlags 332 ausbilden kann, an welche die zweite Anschlagsformation 334 des Halterungselements 301 in der zweiten Anschlag-Stellung anschlagen kann.

In den Figuren 14 und 15 ist der Halterungsabschnitt 409 gemäß einem dritten Ausführungsbeispiel dargestellt, bei welchem eine Gegenanschlagsformation des Vorwärts-Drehanschlags 431 als auch eine Gegenanschlagsformation des Rückwärts-Drehanschlags 432 an dem Rand der Vertiefung 435 des Halterungsabschnitts 409 ausgebildet ist.

Der Rand der Vertiefung kann ein erstes gerades Teilstück 436, ein zweites gebogenes Teilstück 437 und ein drittes gerades Teilstück 436' aufweisen, welche vorzugsweise ineinander übergehen. In der ersten Anschlag-Stellung bzw. Soll-Stellung, siehe Figur 15a, kann sich die erste Anschlagsformation 433 des Halterungselements 401 im Anschlag mit der von dem ersten Teilstück 436 des Randes der Vertiefung ausgebildeten Gegenanschlagsformation des Vorwärts-Drehanschlags 231 befinden. In der zweiten Anschlag-Stellung, siehe Figur 15b, kann sich die zweite Anschlagsformation 434 des Halterungselements 401 im Anschlag mit der von dem dritten Teilstück 436' des Randes der Vertiefung ausgebildeten Gegenanschlagsformation des Rückwärts-Drehanschlags 432 befinden.

Die Ausführung der Vertiefung 235, 435 am hinteren Ende des Halterungsabschnitts 209, 409, welche auf einer Seite in den abschließenden Rand des Halterungsabschnitts 209, 409 übergeht und auf der anderen Seite von einem Rand der Vertiefung 235, 435 begrenzt wird, kann bei den Vertiefungen gemäß dem ersten und/oder dem dritten Ausführungsbeispiel übereinstimmend ausgebildet sein. Der Rand der Vertiefung 235, 435 kann die Vertiefung mit der nach innen weisenden Oberfläche des Halterungsabschnitts 209, 409 verbinden. Es kann jeweils ein Abstand zwischen dem Rand der Vertiefung 235, 435 und der Begrenzung der Halterungsöffnung 211, 411 vorliegen. Dieser Abstand kann mindestens 1 mm, besser 3 mm, noch besser 5mm betragen.

In Figur 16 ist ein weiteres mögliches Ausführungsbeispiels eines Halterungselements 1001 dargestellt. Bei diesem Halterungselement kann es sich um eines der zuvor genannten Halterungselemente 1, 101, 201, 304, 401 handeln. Komponenten bzw. Teile, welche sowohl in dem Halterungselement 1 als auch in dem Halterungselement 1001 vorhanden sind, und/oder mit diesen Zusammenwirken, sind im Folgenden mit 1000 erhöhten Bezugszeichen bezeichnet und deren Funktion wird nicht nochmal wiederholt. Es versteht sich, dass das Halterungselement 1001 auch anstelle der in den zuvor beschriebenen Ausführungsbeispielen verwendeten Halterungselemente 101, 201, 301 und 401 verwendet werden kann. Ferner kann es sich um ein Halterungselement 1001 handeln, bei welchem der aus Kunststoff ausgeführte Bereich 1002 mit dem aus Metall ausgeführten Bereich lösbar verbunden ist.

Das in Figur 16 dargestellte Halterungselement 1001 kann einen Analgenflansch 1043 aufweisen, welcher vorzugsweise der Darstellung entsprechend als ein Kreisring ausgebildet sein kann. Dieser Anlagenflansch 1043, insbesondere eine Anlagenfläche 1044 davon, kann dazu eingerichtet sein, an einer Gegen-Anlagenfläche des Halterungsabschnitts, welche nach innen in Richtung des Halterungselements weist, anzuliegen und/oder diese zu kontaktieren. Die Anlagenfläche 1044 kann in dem montierten Zustand in Richtung des Halterungsabschnitts weisen.

Wie am Besten in Figuren 16a und b ersichtlich, kann sich der Anlagenflansch 1043 an den Abstandshalter 1014 anschließen. Vorzugsweise ist der Anlagenflansch 1043 integral mit dem Halterungselement 1001, insbesondere integral mit dessen aus Kunststoff ausgebildeten Bereich 1002, ausgebildet. Der Anlagenflansch 1043 kann jedoch auch mit dem Halterungselement 1001 verklebt, verschraubt, verpresst oder verrastet sein. Vorzugsweise weisen die Anlagenfläche 1044 und die Gegen-Anlagenfläche einander entsprechende Gestaltungen aufweisen. Noch bevorzugter sind die Anlagenfläche 1044 und die Gegen-Anlagenfläche besonders maßgetreu ausgebildet. Auf diese Weise kann das Halterungselement 1001 gegenüber dem Halterungsabschnitt ausgerichtet werden. Es versteht sich, dass für die gewünschte Ausrichtung der Anlagenflansch 1043 verschiedene andere Formen aufweisen kann. Beispielsweise wären auch einzelne Vorsprünge oder andere Formen denkbar.

## Patentansprüche

1. **Halterungselement** (1; 101; 201; 301; 401; 1001), welches an einer Innenseite eines zugeordneten hinteren Halterungsabschnitts (9; 109; 209; 309; 409) eines Fahrradrahmens (104; 204; 304; 404) montierbar ist, und welches dazu eingerichtet ist, den Fahrradrahmen (104; 204; 304; 404) mit einem hinteren Schaltwerk (5; 105) einer Kettenschaltung zu verbinden, umfassend:
- einen ersten Abschnitt, welcher eine Öffnung oder Aussparung (6; 1006) zum Aufnehmen eines Abschnitts einer Fahrradhinterradachse aufweist, und
- einen zweiten Abschnitt, welcher eine Montageöffnung (7) aufweist, an welcher ein Basiselement des hinteren Schaltwerks (5, 105) festlegbar ist, **dadurch gekennzeichnet, dass**
das Halterungselement (1; 101; 201; 301; 401; 1001) mit wenigstens einem aus Kunststoff ausgeführten Bereich (2) und einem aus Metall ausgeführten Bereich (3) ausgebildet ist und der aus Kunststoff ausgeführte Bereich (2) mit dem aus Metall ausgeführten Bereich (3) fest verbunden ist,
wobei das Halterungselement (1; 101; 201; 301; 401; 1001), vorzugsweise dessen aus Kunststoff ausgeführter Bereich (2), einen Ableitflächenbereich (19, 20) mit einer schrägen Ableitfläche ausbildet, an welchem eine Kette quer zu ihrer Längsrichtung in Richtung eines Ritzelpakets (23) der Kettenschaltung abrutschen kann.

2. **Fahrrad,** umfassend einen Fahrradrahmen (104; 204; 304; 404) mit einem vermittels einer Kettenschaltung antreibbaren Hinterrad, welches ein Ritzelpaket (23) der Kettenschaltung aufweist, wobei eine in einem jeweiligen gewählten Gang mit einem ausgewählten Ritzel eingreifende Kette der Kettenschaltung mittels eines hinteren Schaltwerks (5; 105) der Kettenschaltung zwischen den Ritzeln des Ritzelpakets (23) überführbar ist, wobei das hintere Schaltwerk (5; 105) mittels eines an einer Innenseite eines zugeordneten hinteren Halterungsabschnitts (9; 109; 209; 309; 409) des Fahrradrahmens (104; 204; 304; 404) montierten Halterungselements (1; 101; 201; 301; 401; 1001) mit dem Fahrradrahmen (104; 204; 304; 404) verbunden ist, umfassend:
- einen ersten Abschnitt, welcher eine Öffnung oder Aussparung (6; 1006) aufweist, in welcher ein Abschnitt einer Fahrradhinterradachse des Hinterrads aufgenommen ist, und
- einen zweiten Abschnitt, welcher eine Montageöffnung (7) aufweist, an welcher ein Basiselement des hinteren Schaltwerks (5; 105) festgelegt ist,
**dadurch gekennzeichnet, dass**
das Halterungselement (1; 101; 201; 301; 401; 1001) an wenigstens einem äußeren Randbereich mit einem Ableitflächenbereich (19, 20) mit einer schrägen Ableitfläche ausgeführt ist, auf welchem die Kette, wenn sie von einem Ritzel des Ritzelpakets (23) in Richtung zum Halterungselement (1; 101; 201; 301; 401; 1001) über den axialen Bereich des Ritzelpakets (23) hinaus abgesprungen ist, aufliegen kann und dann in Richtung des kleinsten Ritzels (24) abrutschen kann, um eine Wiederherstellung des Eingriffs der Kette mit dem oder einem Ritzel des Ritzelpakets (23) zu erreichen oder zu diesem beizutragen.

3. Fahrrad nach Anspruch 2,
**dadurch gekennzeichnet, dass** das Halterungselement (101; 201; 301; 401; 1001) mit wenigstens einem aus Kunststoff ausgeführten Bereich (1002) und einem aus Metall ausgeführten Bereich ausgebildet ist und der aus Kunststoff ausgeführte Bereich (1002) mit dem aus Metall ausgeführten Bereich lösbar verbunden ist.

4. Fahrrad nach einem der Ansprüche 2 oder 3,
**dadurch gekennzeichnet, dass** ein Abstand (25) zwischen einer in Richtung des Ritzelpakets weisenden Außenfläche (26) des Halterungselements (1; 101; 201; 301; 401; 1001) und dem kleinsten Ritzel (24) derart ist, dass die Kette nicht dazwischen einklemmen kann.

5. Fahrrad nach einem der Ansprüche 2 bis 4,
**dadurch gekennzeichnet, dass** in Bezug auf einen Mittelpunkt einer/der Öffnung oder Aussparung (6; 1006) des Halterungselements (1; 101; 201; 301; 401; 1001) ein radiales Niveau eines dem Ritzelpaket (23) nächstbenachbarten ersten Randes (21) des Ableitflächenbereichs (19, 20) auf dem radialen Niveau eines Kopfkreisdurchmessers des kleinsten Ritzels (24) des Ritzelpakets (23) liegt oder gegenüber diesem nach radial innen versetzt ist.

6. Fahrrad nach Anspruch 5,
**dadurch gekennzeichnet, dass** der Ableitflächenbereich (19, 20) einen zweiten Rand (22) aufweist, welcher dem zugeordneten hinteren Halterungsabschnitt (9; 109; 209; 309; 409) näher ist als der erste Rand (21), und in Bezug auf das radiale Niveau des ersten Randes (21) nach außen versetzt ist.

7. Fahrrad nach einem der Ansprüche 2 bis 6,
**dadurch gekennzeichnet, dass** eine gedachte Verlängerung, welche die zwei Ränder (21, 22) des Ableitflächenbereichs (19, 20) schneidet und in Richtung des kleinsten Ritzels (24) verläuft, ebenfalls die durch den Kopfkreisdurchmesser des kleinsten Ritzels (24) des Ritzelpakets (23) definierte Umlauffläche des kleinsten Ritzels (24) oder das kleinste Ritzel (24) innerhalb des Kopfkreises schneidet.

8. Fahrrad nach einem der Ansprüche 2 bis 7,
**dadurch gekennzeichnet, dass** der Ableitflächenbereich (19, 20) ein einem Lasttrum der Kette benachbarter Ableitflächenbereich (19) oder ein einem Leertrum benachbarter Ableitflächenbereich (20) ist oder sich derart erstreckt, dass er sowohl dem Lasttrum als auch dem Leertrum der Kette benachbart ist,
oder das Halterungselement (1; 101; 201; 301; 401; 1001) zwei gesondert ausgeführte Ableitflächenbereiche (19, 20) umfasst, von welchen einer dem Lasttrum der Kette und der andere dem Leertrum der Kette benachbart ist,
wobei vorzugsweise die beiden Ableitflächenbereiche (19, 20) in Bezug auf einen/den Mittelpunkt einer/der Öffnung oder Aussparung (6; 1006) des Halterungselements (1; 101; 201; 301; 401; 1001) bei unterschiedlichen Drehwinkeln angeordnet sind.

9. Fahrrad nach Anspruch 8,
**dadurch gekennzeichnet, dass** die zwei Ableitflächenbereiche (19, 20) in Bezug auf den Mittelpunkt der Öffnung oder Aussparung (6; 1006) bei unterschiedlichen radialen Niveaus angeordnet sind.

10. Fahrrad nach Anspruch 8 oder 9,
**dadurch gekennzeichnet, dass** dann, wenn sich eine Kontaktlinie oder ein Kontaktpunkt (54) einer Außenkante (53) einer Außenlasche eines Kettengliedes (51, 52) der Kette mit dem dem Leertrum benachbarten Ableitflächenbereich (20) auf einem radialen Niveau (57) befindet, welches einem radialen Niveau (57) eines Kopfkreisdurchmesser des kleinsten Ritzels (24) oder einer vom Halterungselement (1; 101; 201; 301; 401; 1001) ferneren Zahnkopfkante (56) eines Zahnkopfes eines Ritzelzahns (50) des kleinsten Ritzels (24) entspricht,
eine Innenkante (55) einer vom Halterungselement (1; 101; 201; 301; 401; 1001) ferneren Innenlasche eines dem Kettenglied (51, 52) benachbarten Kettenglieds (52, 51) auf dem gleichen axialen Niveau (58) wie eine den Kopfkreisdurchmesser bestimmende Zahnkopfkante (56) oder die vom Halterungselement (1; 101; 201; 301; 401; 1001) fernere Zahnkopfkante (56) liegt oder - vorzugsweise - gegenüber dieser Zahnkopfkante (56) einen größeren axialen Abstand von dem Halterungselement (1; 101; 201; 301; 401; 1001) aufweist.

11. Fahrrad nach einem der Ansprüche 2 bis 10,
**dadurch gekennzeichnet, dass** das Fahrrad ferner einen Anlagenflansch (1043) aufweist, welcher mit dem Halterungselement (1001) verbindbar oder verbunden ist oder von diesem ausgebildet wird, oder
mit dem Halterungsabschnitt (9; 109; 209; 309; 409) verbindbar oder verbunden ist oder von diesem ausgebildet wird.

12. Fahrrad nach Anspruch 11,
**dadurch gekennzeichnet, dass** eine zu dem Halterungsabschnitt (9; 109; 209; 309; 409) weisende Anlagenfläche (1044) des Halterungselements (1001) an einer Gegen-Anlagenfläche des Halterungsabschnitts (9; 109; 209; 309; 409) anliegt, wobei eine aus der Anlagenfläche (1044) und der Gegen-Anlagenfläche dem Anlagenflansch (1043) ausgebildet ist.

13. Fahrrad nach Anspruch 12,
**dadurch gekennzeichnet, dass** der Anlagenflansch (1043) mit der Anlagenfläche (1044) von dem Halterungselement (1001) hervorsteht und die Gegen-Anlagenfläche von dem Halterungsabschnitt (9; 109; 209; 309; 409) ausgebildet ist und gegenüber einer benachbarten Oberfläche des Halterungsabschnitts (9; 109; 209; 309; 409) vertieft ist, wobei vorzugsweise der Anlagenflansch (1043) in eine die Gegen-Anlagenfläche ausbildende Vertiefung eingreift.

## Claims

1. **Bracket element** (1; 101; 201; 301; 401; 1001) which is mountable on an inner side of an associated rear bracket portion (9; 109; 209; 309; 409) of a bicycle frame (104; 204; 304; 404) and which is configured to connect the bicycle frame (104; 204; 304; 404) to a rear gearshift mechanism (5; 105) of a derailleur system, comprising:
- a first portion, which has an opening or aperture (6; 1006) for receiving a portion of a bicycle rear-wheel axle, and
- a second portion, which has a mounting opening (7) to which a base element of the rear gearshift mechanism (5; 105) is fixable,
**characterized in that**
the bracket element (1; 101; 201; 301; 401; 1001) is formed with at least a region (2) made from plastic and a region (3) made from metal, and the region (2) made from plastic is connected fixedly to the region (3) made from metal,
wherein the bracket element (1; 101; 201; 301; 401; 1001), preferably the region (2) thereof made from plastic, forms a deflecting-surface region (19, 20), with an oblique deflecting surface, on which a chain can slip transversely to its longitudinal direction in the direction of a pinion assembly (23) of the derailleur system.

2. **Bicycle,** comprising a bicycle frame (104; 204; 304; 404) with a rear wheel which is drivable by means of a derailleur system and which has a pinion assembly (23) of the derailleur system, wherein a chain of the derailleur system that engages with a selected pinion in a respective selected gear is transferrable between the pinions of the pinion assembly (23) by means of a rear gearshift mechanism (5; 105) of the derailleur system, wherein the rear gearshift mechanism (5; 105) is connected to the bicycle frame (104; 204; 304; 404) by means of a bracket element (1; 101; 201; 301; 401; 1001) which is mounted on an inner side of an associated rear bracket portion (9; 109; 209; 309; 409) of the bicycle frame (104; 204; 304; 404) and which comprises:
- a first portion, which has an opening or aperture (6; 1006) in which a portion of a bicycle rear-wheel axle of the rear wheel is received, and
- a second portion, which has a mounting opening (7) to which a base element of the rear gearshift mechanism (5; 105) is fixed,
**characterized in that**
the bracket element (1; 101; 201; 301; 401; 1001), on at least one outer edge region, is designed with a deflecting-surface region (19, 20), with an oblique deflecting surface, on which the chain, when it has jumped from a pinion of the pinion assembly (23) beyond the axial region of the pinion assembly (23) in the direction of the bracket element (1; 101; 201; 301; 401; 1001), can bear and can then slip in the direction of the smallest pinion (24) so as to re-establish engagement of the chain with the or a pinion of the pinion assembly (23) or to contribute thereto.

3. Bicycle according to Claim 2,
**characterized in that** the bracket element (101; 201; 301; 401; 1001) is formed with at least a region (1002) made from plastic and a region made from metal, and the region (1002) made from plastic is connected releasably to the region made from metal.

4. Bicycle according to either of Claims 2 and 3, **characterized in that** a distance (25) between an outer surface (26), oriented in the direction of the pinion assembly, of the bracket element (1; 101; 201; 301; 401; 1001) and the smallest pinion (24) is such that the chain cannot become jammed therebetween.

5. Bicycle according to one of Claims 2 to 4, **characterized in that**, with respect to a centre of a/the opening or aperture (6; 1006) of the bracket element (1; 101; 201; 301; 401; 1001), a radial level of a first edge (21), most closely adjacent to the pinion assembly (23), of the deflecting-surface region (19, 20) is at the radial level of a tip-circle diameter of the smallest pinion (24) of the pinion assembly (23) or is radially inwardly offset in relation thereto.

6. Bicycle according to Claim 5,
**characterized in that** the deflecting-surface region (19, 20) has a second edge (22) which is closer to the associated rear bracket portion (9; 109; 209; 309; 409) than the first edge (21) and which is outwardly offset in relation to the radial level of the first edge (21).

7. Bicycle according to one of Claims 2 to 6, **characterized in that** an imaginary extension intersecting the two edges (21, 22) of the deflecting-surface region (19, 20) and extending in the direction of the smallest pinion (24) also intersects the circumferential surface, defined by the tip-circle diameter of the smallest pinion (24) of the pinion assembly (23), of the smallest pinion (24), or the smallest pinion (24) within the tip circle.

8. Bicycle according to one of Claims 2 to 7, **characterized in that** the deflecting-surface region (19, 20) is a deflecting-surface region (19) adjacent to a load strand of the chain or is a deflecting-surface region (20) adjacent to an empty strand or extends in such a way as to be adjacent both to the load strand and to the empty strand of the chain,
or the bracket element (1; 101; 201; 301; 401; 1001) comprises two separately formed deflecting-surface regions (19, 20) of which one is adjacent to the load strand of the chain and the other is adjacent to the empty strand of the chain,
wherein preferably the two deflecting-surface regions (19, 20) are arranged at different rotational angles with respect to a/the centre of a/the opening or aperture (6; 1006) of the bracket element (1; 101; 201; 301; 401; 1001).

9. Bicycle according to Claim 8,
**characterized in that** the two deflecting-surface regions (19, 20) are arranged at different radial levels with respect to the centre of the opening or aperture (6; 1006).

10. Bicycle according to Claim 8 or 9, **characterized in that**, if a line of contact or a point of contact (54) of an outer edge (53) of an outer link plate of a chain link (51, 52) of the chain with the deflecting-surface region (20) adjacent to the empty strand is at a radial level (57) which corresponds to a radial level (57) of a tip-circle diameter of the smallest pinion (24) or of a tooth-tip edge (56) of a tooth tip of a pinion tooth (50) of the smallest pinion (24) that is relatively far from the bracket element (1; 101; 201; 301; 401; 1001), an inner edge (55) of an inner link plate, relatively far from the bracket element (1; 101; 201; 301; 401; 1001), of a chain link (52, 51) adjacent to the chain link (51, 52) is at the same axial level (58) as a tooth-tip edge (56) determining the tip-circle diameter or the tooth-tip edge (56) relatively far from the bracket element (1; 101; 201; 301; 401; 1001), or - preferably - is at a greater axial distance from the bracket element (1; 101; 201; 301; 401; 1001) than said tooth-tip edge (56).

11. Bicycle according to one of Claims 2 to 10, **characterized in that** the bicycle furthermore has an abutment flange (1043) which is connectable or connected to the bracket element (1001) or is formed by the latter, or which is connectable or connected to the bracket portion (9; 109; 209; 309; 409) or is formed by the latter.

12. Bicycle according to Claim 11,
**characterized in that** an abutment surface (1044), oriented towards the bracket portion (9; 109; 209; 309; 409), of the bracket element (1001) abuts against a counterpart abutment surface of the bracket portion (9; 109; 209; 309; 409), wherein one of the abutment surface (1044) and the counterpart abutment surface is formed on the abutment flange (1043).

13. Bicycle according to Claim 12,
**characterized in that** the abutment flange (1043) projects with the abutment surface (1044) from the bracket element (1001), and the counterpart abutment surface is formed by the bracket portion (9; 109; 209; 309; 409) and is recessed in relation to an adjacent surface of the bracket portion (9; 109; 209; 309; 409), wherein preferably the abutment flange (1043) engages into a depression which forms the counterpart abutment surface.

## Revendications

1. **Élément de retenue** (1 ; 101 ; 201 ; 301 ; 401 ; 1001), lequel peut être monté sur un côté intérieur d'une partie de retenue (9 ; 109 ; 209 ; 309 ; 409) arrière associée d'un cadre de bicyclette (104 ; 204 ; 304 ; 404), et lequel est conçu pour relier le cadre de bicyclette (104 ; 204 ; 304 ; 404) à un dérailleur arrière (5 ; 105) d'un changement de vitesses à dérailleur, comportant :
- une première partie, laquelle comprend une ouverture ou un évidement (6 ; 1006) pour recevoir une partie d'un axe de roue arrière de bicyclette, et
- une deuxième partie, laquelle comprend une ouverture de montage (7) à laquelle peut être fixé un élément de base du dérailleur arrière (5, 105), **caractérisé en ce que**
l'élément de retenue (1 ; 101 ; 201 ; 301 ; 401 ; 1001) est formé avec au moins une région (2) réalisée en matière synthétique et une région (3) réalisée en métal et la région (2) réalisée en matière synthétique est reliée fixement à la région (3) réalisée en métal,
l'élément de retenue (1 ; 101 ; 201 ; 301 ; 401 ; 1001), de préférence sa région (2) réalisée en matière synthétique, formant une région de surface de déviation (19, 20) comportant une surface de déviation oblique, région sur laquelle une chaîne peut glisser transversalement à sa direction longitudinale en direction d'une cassette (23) du changement de vitesses à dérailleur.

2. **Bicyclette,** comportant un cadre de bicyclette (104 ; 204 ; 304 ; 404) doté d'une roue arrière pouvant être entraînée au moyen d'un changement de vitesses à dérailleur, laquelle roue arrière comprend une cassette (23) du changement de vitesses à dérailleur, une chaîne du changement de vitesses à dérailleur, laquelle chaîne vient en prise avec un pignon sélectionné dans un rapport sélectionné respectif, pouvant être transférée, au moyen d'un dérailleur arrière (5 ; 105) du changement de vitesses à dérailleur, entre les pignons de la cassette (23), le dérailleur arrière (5 ; 105) étant relié au cadre de bicyclette (104 ; 204 ; 304 ; 404) au moyen d'un élément de retenue (1 ; 101 ; 201 ; 301 ; 401 ; 1001) monté sur un côté intérieur d'une partie de retenue (9 ; 109 ; 209 ; 309 ; 409) arrière associée du cadre de bicyclette (104 ; 204 ; 304 ; 404), comprenant :
- une première partie, laquelle comprend une ouverture ou un évidement (6 ; 1006) dans lequel/laquelle une partie d'un axe de roue arrière de bicyclette de la roue arrière est reçue, et
- une deuxième partie, laquelle comprend une ouverture de montage (7) à laquelle est fixé un élément de base du dérailleur arrière (5 ; 105),
**caractérisée en ce que**
l'élément de retenue (1 ; 101 ; 201 ; 301 ; 401 ; 1001) est, au niveau d'au moins une région de bord extérieure, réalisé avec une région de surface de déviation (19, 20) comportant une surface de déviation oblique, région sur laquelle la chaîne peut reposer lorsqu'elle a sauté à partir d'un pignon de la cassette (23) en direction de l'élément de retenue (1 ; 101 ; 201 ; 301 ; 401 ; 1001) au-delà de la région axiale de la cassette (23), puis peut glisser en direction du plus petit pignon (24), afin de rétablir l'entrée en prise de la chaîne avec le ou un pignon de la cassette (23) ou d'y contribuer.

3. Bicyclette selon la revendication 2,
**caractérisée en ce que** l'élément de retenue (1 ; 101 ; 201 ; 301 ; 401 ; 1001) est formé avec au moins une région (1002) réalisée en matière synthétique et une région réalisée en métal et la région (1002) réalisée en matière synthétique est reliée de manière amovible à la région réalisée en métal.

4. Bicyclette selon l'une des revendications 2 ou 3, **caractérisée en ce qu'**une distance (25) entre une surface extérieure (26), tournée en direction de la cassette, de l'élément de retenue (1 ; 101 ; 201 ; 301 ; 401 ; 1001) et le plus petit pignon (24) est telle que la chaîne ne peut pas se coincer entre ceux-ci.

5. Bicyclette selon l'une des revendications 2 à 4, **caractérisée en ce que** par rapport à un centre d'une ouverture/de l'ouverture ou d'un évidement/de l'évidement (6 ; 1006) de l'élément de retenue (1 ; 101 ; 201 ; 301 ; 401 ; 1001), un niveau radial d'un premier bord (21), immédiatement adjacent à la cassette (23), de la région de surface de déviation (19, 20) se situe au niveau radial d'un diamètre de cercle de tête du plus petit pignon (24) de la cassette (23) ou est décalé radialement vers l'intérieur par rapport à celui-ci.

6. Bicyclette selon la revendication 5,
**caractérisée en ce que** la région de surface de déviation (19, 20) comprend un deuxième bord (22), lequel est plus proche de la partie de retenue (9 ; 109 ; 209 ; 309 ; 409) arrière associée que le premier bord (21), et est décalé vers l'extérieur par rapport au niveau radial du premier bord (21).

7. Bicyclette selon l'une des revendications 2 à 6, **caractérisée en ce qu'**un prolongement imaginaire, lequel coupe les deux bords (21, 22) de la région de surface de déviation (19, 20) et s'étend en direction du plus petit pignon (24), coupe également la surface de révolution du plus petit pignon (24), laquelle est définie par le diamètre de cercle de tête du plus petit pignon (24) de la cassette (23), ou le plus petit pignon (24) à l'intérieur du cercle de tête.

8. Bicyclette selon l'une des revendications 2 à 7, **caractérisée en ce que** la région de surface de déviation (19, 20) est une région de surface de déviation (19) voisine d'un brin sous charge de la chaîne ou une région de surface de déviation (20) voisine d'un brin vide ou s'étend de telle sorte qu'elle est voisine à la fois du brin sous charge et du brin vide de la chaîne,
ou l'élément de retenue (1 ; 101 ; 201 ; 301 ; 401 ; 1001) comporte deux régions de surface de déviation (19, 20) réalisées séparément, parmi lesquelles une est voisine du brin sous charge de la chaîne et l'autre est voisine du brin vide de la chaîne,
les deux régions de surface de déviation (19, 20) étant de préférence disposées suivant différents angles de rotation par rapport à un centre/au centre d'une ouverture/de l'ouverture ou d'un évidement/de l'évidement (6 ; 1006) de l'élément de retenue (1 ; 101 ; 201 ; 301 ; 401 ; 1001).

9. Bicyclette selon la revendication 8,
**caractérisée en ce que** les deux régions de surface de déviation (19, 20) sont disposées à des niveaux radiaux différents par rapport au centre de l'ouverture ou de l'évidement (6 ; 1006).

10. Bicyclette selon la revendication 8 ou 9, **caractérisée en ce que** lorsqu'une ligne de contact ou un point de contact (54) d'une arête extérieure (53) d'une languette extérieure d'un maillon (51, 52) de la chaîne avec la région de surface de déviation (20) voisine du brin vide se trouve à un niveau radial (57), lequel correspond à un niveau radial (57) d'un diamètre de cercle de tête du plus petit pignon (24) ou d'une arête de tête de dent (56) plus éloignée de l'élément de retenue (1 ; 101 ; 201 ; 301 ; 401 ; 1001) d'une tête de dent d'une dent de pignon (50) du plus petit pignon (24), une arête intérieure (55) d'une languette intérieure plus éloignée de l'élément de retenue (1 ; 101 ; 201 ; 301 ; 401 ; 1001) d'un maillon de chaîne (52, 51) voisin du maillon de chaîne (51, 52) se trouve au même niveau axial (58) qu'une arête de tête de dent (56) définissant le diamètre de cercle de tête ou que l'arête de tête de dent (56) plus éloignée de l'élément de retenue (1 ; 101 ; 201 ; 301 ; 401 ; 1001), de préférence, présente par rapport à cette arête de tête de dent (56) une plus grande distance axiale à l'élément de retenue (1 ; 101 ; 201 ; 301 ; 401 ; 1001).

11. Bicyclette selon l'une des revendications 2 à 10, **caractérisée en ce que** la bicyclette comprend en outre une bride d'appui (1043), laquelle peut être reliée ou est reliée à l'élément de retenue (1001) ou est formée par celui-ci,
ou
peut être reliée ou est reliée à la partie de retenue (9 ; 109 ; 209 ; 309 ; 409) ou est formée par celle-ci.

12. Bicyclette selon la revendication 11,
**caractérisée en ce qu'**une surface d'appui (1044) de l'élément de retenue (1001) tournée vers la partie de retenue (9 ; 109 ; 209 ; 309 ; 409) s'appuie contre une surface d'appui conjuguée de la partie de retenue (9 ; 109 ; 209 ; 309 ; 409), l'une parmi la surface d'appui (1044) et la surface d'appui conjuguée étant formée sur la bride d'appui (1043).

13. Bicyclette selon la revendication 12,
**caractérisée en ce que** la bride d'appui (1043) dépasse de l'élément de retenue (1001) par la surface d'appui (1044) et la surface d'appui conjuguée est formée par la partie de retenue (9 ; 109 ; 209 ; 309 ; 409) et est renfoncée par rapport à une surface adjacente de la partie de retenue (9 ; 109 ; 209 ; 309 ; 409), la bride d'appui (1043) venant en prise de préférence dans un renfoncement formant la surface d'appui conjuguée.
